(19) **Europäisches Patentamt European Patent Office Office européen des brevets**

(11) **EP 1 674 993 B1**

(12) **EUROPEAN PATENT SPECIFICATION**

(45) Date of publication and mention of the grant of the patent:
**02.12.2009 Bulletin 2009/49**

(51) Int Cl.:
**_G06F 9/44_** *(2006.01)*

(21) Application number: **05257726.9**

(22) Date of filing: **15.12.2005**

(54) **User help for identifying the meaning of icons set and used in the user interface of a digital camera**

Benutzerhilfe zur Identifikation der Bedeutung von Icons, die in eine Benutzeroberfläche einer Digitalkamera installiert und benutzt werden

Aide utilisateur pour identifier la signification d'icônes installées et utilisées dans une interface utilisateur de caméra numérique

(84) Designated Contracting States:
**AT BE BG CH CY CZ DE DK EE ES FI FR GB GR HU IE IS IT LI LT LU LV MC NL PL PT RO SE SI SK TR**

(30) Priority: **22.12.2004 JP 2004371830**

(43) Date of publication of application:
**28.06.2006 Bulletin 2006/26**

(73) Proprietor: **Sony Corporation Tokyo 141 (JP)**

(72) Inventors:
• **Ishii, Naoya**
  **Shinagawa-Ku**
  **Tokyo 141 (JP)**
• **Kamiya, Mayumi**
  **Shinagawa-Ku**
  **Tokyo 141 (JP)**

(74) Representative: **Leppard, Andrew John**
  **D Young & Co**
  **120 Holborn**
  **London EC1N 2DY (GB)**

(56) References cited:
**EP-A- 1 434 411      US-B1- 6 788 313**

**Description**

The present invention relates to a method and apparatus for processing an image, a computer program, and a recording medium.

An increasing number of electronic apparatuses currently allows users to enter a variety of settings and provides functions satisfying various preferences different from user to user. With a plurality of available functions and a variety of setting items at which respective functions are set, the user has difficulty in identifying what function is currently effective, and what item of the function is set, and how the item is set. Japanese Unexamined Patent Application Publication 2001-312343 discloses a user interface that helps a user to recognize a set function.

EP1434411 A1 discloses a method for providing further information relating to the status of a portable electronic device. The status of the portable electronic device is displayed using a series of icons. Upon detecting a selection of further information from a user, limited further information relating to the status of the portable electronic device is displayed to the user. Thus, further information related to icons shown in a status bar of the device can easily be accessed.

US 6,788,313 B1 discloses a method and apparatus in a data processing system for generating a user guide for an application in which application features are customizable through user input.

Icons are typically used to indicate functions to users in a user-friendly manner. Upon viewing the shape of each icon, a user can recognize what function is set, and what item of the set function is set.

As the functions and setting items increase in number, the number of icons also increases. The larger the number of icons, the more the user has difficulty in memorizing all of the icons. If the user fails to remember the meaning of any icon, the user needs to consult a reference book.

For example, if an alarming icon is displayed, the user needs to take action in response to the icon. Without the knowledge of that icon, the user cannot take action. Consulting a reference book each time the user is not sure of the meaning of an icon is problematic from the standpoint of user friendliness.

If the number of icons is large, consulting a reference book is time consuming.

It is thus desirable to provide a function that helps a user to efficiently check the meaning of an icon if the user is not familiar with that icon.

It is also desirable to provide an easy-to-use user interface.

Aspects of the present invention are set out in the claims.

In accordance with one embodiment of the present invention, a display apparatus comprising: storage means for storing icons to be displayed on a display screen, and a table managing information relating to the icons; wherein the information relating to the icons comprises a name of a function represented by an icon and a value set for the function; creating means for creating a list registering only icons displayed on an initial screen on the display screen by referencing the table; generating means for generating display data for a display guide screen of the icons registered in the list and of the information relating to the icons, by referencing the table; and display control means for controlling the display of the display data on the display screen; characterised in that the initial screen of the display screen is partitioned into a plurality of areas, each area comprising a plurality of icons; wherein the storage means stores the table on a per area basis; and wherein the creating means creates the list by referencing the table corresponding to the area selected by a user.

A plurality of icons displayed on one area of the initial screen having specific values may be handled as a unit of icons; and the generating means generates the display data for the display guide screen, in which the information relating to the unit of icons is arranged for the display guide screen with the same layout as the unit of icons displayed on the one area of the initial screen.

In accordance with another embodiment of the present invention, a display method comprising steps of: storing icons to be displayed on a display screen, and a table managing information relating to the icons; wherein the information relating to the icons comprises a name of a function represented by an icon and a value set for the function; creating a list registering only icons displayed on an initial screen on the display screen by referencing the table; generating display data for a display guide screen of the icons registered in the list and of the information relating to the icons, by referencing the table; and controlling the display of the display data on the display screen; characterised by the steps of: partitioning the initial screen of the display screen into a plurality of areas, each area comprising a plurality of icons; wherein the table is stored on a per area basis; and wherein the list is created by referencing the table corresponding to the area selected by a user.

In accordance with another embodiment of the present invention, a computer program for causing a computer to display images, the computer program comprising program code for performing steps of: storing icons to be displayed on a display screen; and a table managing information relating to the icons; wherein the information relating to the icons comprises a name of a function represented by an icon and a value set for the function; creating a list registering only icons displayed on an initial screen on the display screen by referencing the table; generating display data for a display guide screen of the icons registered in the list and of the information relating to the icons, by referencing the table; and controlling the display of the display data on the display screen; characterised by the steps of: partitioning the initial screen of the display screen into a plurality of areas, each area comprising a plurality of icons; wherein the table is stored on a per area basis; and wherein the list is created by referencing the table corresponding to the area selected by a user.

In accordance with another embodiment of the present invention, a recording medium storing a computer program for causing a computer to display images, the computer program comprising program code for performing steps of: storing icons to be displayed on a display screen, and a table managing information relating to the icons; wherein the informations relating to the icons comprises a name of a function represented by an icon and a value set for the function; creating a list registering only icons displayed on an initial screen on the display screen by referencing the table; generating display data for a display guide screen of the icons registered in the list and of the information relating to the icons, by referencing the table; and controlling the display of the display data on the display screen; characterised by the steps of: partitioning the initial screen of the display screen into a plurality of areas, each area comprising a plurality of icons; wherein the table is stored on a per area basis; and wherein the list is created by referencing the table corresponding to the area selected by a user.

In accordance with embodiments of the present invention, one display screen is partitioned into a plurality of areas, and an icon related to an area is displayed on that area. An icon and information concerning the icon are managed in a table. When a predetermined area is selected by a user, the corresponding table is referenced. A screen formed of an icon displayed in the area at the time of selection and information concerning the icon is generated.

In accordance with embodiments of the present invention, the user is provided with information concerning set function and values.

In accordance with embodiments of the present invention, the user can recognize the meaning of a displayed icon by a simple operation.

In accordance with embodiments of the present invention, the user can recognize the set values by a simple operation.

Further particular and preferred aspects of the present invention are set out in the accompanying independent and dependent claims. Features of the dependent claims may be combined with features of the independent claims as appropriate.

The present invention will be described further, by way of example only, with reference to preferred embodiments thereof as illustrated in the accompanying drawings, in which:

Fig. 1 illustrates an image processing apparatus in accordance with one embodiment of the present invention;
Fig. 2 is a block diagram illustrating the internal structure of the image processing apparatus;
Fig. 3 illustrates the internal structure of the image processing apparatus related to displaying functions;
Figs. 4A and 4B illustrate a display screen example displayed on an liquid-crystal display (LCD);
Fig. 5 illustrates a display screen example displayed on the LCD;
Fig. 6 illustrates a display screen example displayed on the LCD;
Figs. 7A and 7B illustrate display screen examples displayed on the LCD;
Figs. 8A and 8B illustrate display screen examples displayed on the LCD;
Figs. 9A and 9B illustrate display screen examples displayed on the LCD;
Figs. 10A and 10B illustrate display screen examples displayed on the LCD;
Figs. 11A and 11B illustrate display screen examples displayed on the LCD;
Figs. 12A and 12B illustrate display screen examples displayed on the LCD;
Figs. 13A and 13B illustrate display screen examples displayed on the LCD;
Fig. 14 illustrates information stored in a first area table;
Fig. 15 illustrates information stored in a second area table;
Fig. 16 illustrates information stored in a third area table;
Fig. 17 illustrates information stored in a fourth area table;
Fig. 18 illustrates information stored in a fifth area table;
Fig. 19 illustrates a displays screen example displayed on the LCD;
Fig. 20 illustrates a display order;
Fig. 21 illustrates a display screen example displayed on the LCD;
Fig. 22 is a flowchart illustrating a process of creating a display list;
Fig. 23 illustrates an area table;
Fig. 24 illustrates a display list;
Fig. 25 is a flowchart illustrating a process of screen data generation; and
Fig. 26 illustrates a recording medium.

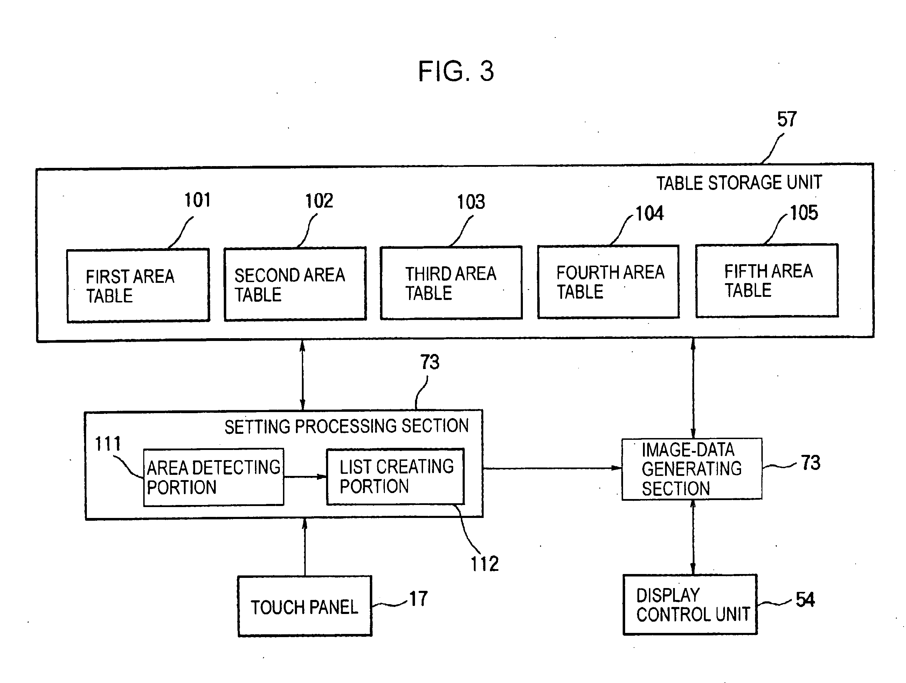

The image processing apparatus of one embodiment of the present invention is an image processing apparatus 1 of Fig. 3, for example. The image processing apparatus includes a storage unit (for example, a table storage unit 57 of Fig. 3) for storing icons to be displayed on a display screen, and a table managing information relating to the icons, a creating unit (for example, a list creating portion 112 of Fig. 3) for creating a list registering only displayed icons by referencing the table, and a generating unit (for example, an image-data generating section 73 of Fig. 3) for generating display data of the icons registered in the list and of the information relating to the icons, by referencing the table.

The embodiments of the present invention are described below with reference to the drawings.

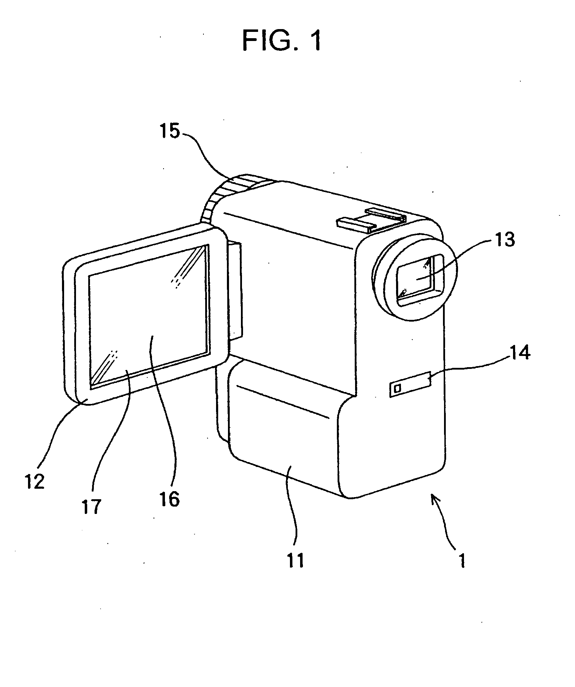

Fig. 1 illustrates an image processing apparatus 1 of one embodiment of the present invention. As shown in Fig. 1, the image processing apparatus 1, such as a camcorder, includes an apparatus body 11, and a liquid-crystal display (LCD) 12.

Arranged on the back surface of the apparatus body 11 are a viewfinder 13 and a power switch 14. The viewfinder 13 is used by a user to check a subject to be photographed. The power switch 14 is used to power on the image processing apparatus 1. The power switch 14 may be used as a switch to switch between a picture-taking mode and a playback mode.

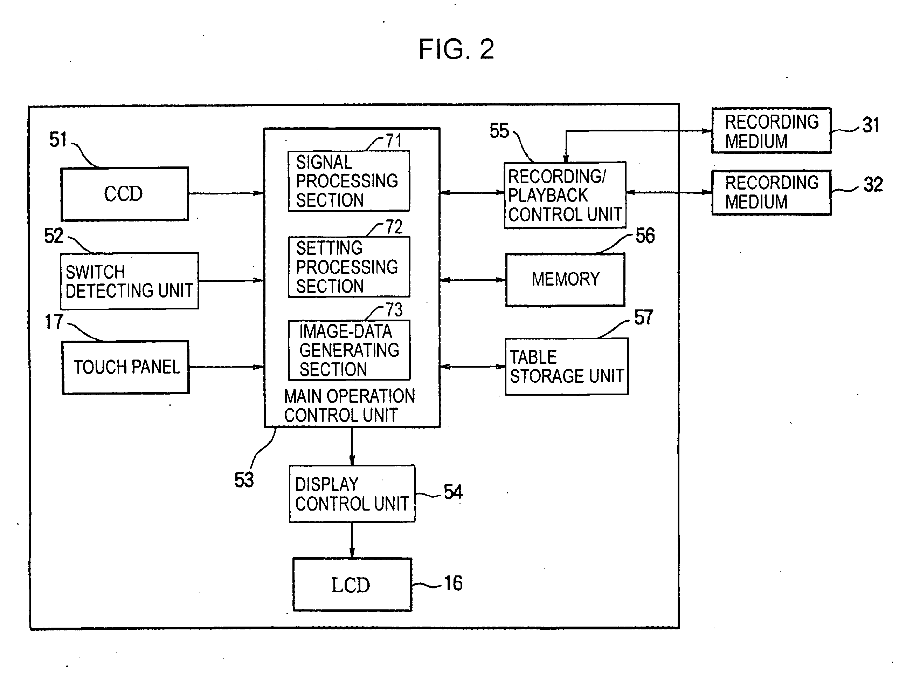

A camera 15 is mounted on a top area of the front surface opposed to the back surface of the apparatus body 11 bearing the viewfinder 13. The camera 15 includes a lens (not shown) for taking pictures, and a charge-coupled device (CCD) 51 (Fig. 2).

A liquid-crystal display (LCD) module 12 is openably attached to the apparatus body 11 with a hinge (not shown), for example, so that the LCD module 12 is opened toward the left-hand side of the apparatus body 11 during picture taking, and closed to the apparatus body 11 during storage. The LCD module 12 includes an LCD 16 for displaying an image captured by the camera 15 and a list of setting items. The LCD 16 includes a touchpanel 17.

The touchpanel 17 detects a portion thereof touched by a user. More specifically, the touchpanel 17 detects the coordinates of a location where the user touches. By identifying the coordinates, an item specified by the user is identified.

As shown in Fig. 1, buttons for use in recording video is not closely related to the following discussion, and are not shown herein. This does not mean that the image processing apparatus 1 is not provided with buttons (not shown).

Fig. 2 illustrates the internal structure of the image processing apparatus 1. A recording medium 31 and a recording medium 32 can be loaded onto the image processing apparatus 1. The recording medium 31 is different from the recording medium 32 in type. For example, the recording medium 31 may be a tape-like medium such a digital video cassette, and the recording medium 32 may be a card-like medium such as a memory stick. Another type of recording medium such as a disk-like medium including a digital versatile disk (DVD) may be used for one of the recording media 31 and 32.

In response to the operation of the power switch 14 and another switch (not shown) by the user, the image processing apparatus 1 stores data of an image captured by the camera 15 onto one of the recording medium 31 and the recording medium 32 loaded therewithin, and displays data of a file stored on one of the recording medium 31 and the recording medium 32 on the LCD 16.

The CCD 51 takes an image of a subject, and supplies a main operation control unit 53 with the captured image of the subject. A switch detecting unit 52 detects the operation of the power switch 14 (Fig. 1) by the user, and supplies the main operation control unit 53 with an power-on signal and a power supply mode switching signal in response to the detected operation.

The touchpanel 17 is mounted on the LCD 16 and forms a unitary body with the LCD 16. When the user touches the touchpanel 17 with a finger tip or a pen tip, the touchpanel 17 detects the corresponding touch location. The touchpanel 17 is formed of a transparent member so that the user see an image displayed on the LCD 16 through the transparent member. A signal from the touchpanel 17 is supplied to the main operation control unit 53.

The main operation control unit 53 includes a signal processing section 71, a setting processing section 72, and an image-data generating section 73. The main operation control unit 53 controls elements within the image processing apparatus 1 in response to signals from the switch detecting unit 52 and the touchpanel 17.

The touchpanel 17 forms a part of an operation unit to be operated to convey a command from the user to the image processing apparatus 1. A member (switch) such as a jog dial® may also be arranged as a part of the operation unit. The member may be designed to operate in the same manner as the touchpanel 17. The member may be substituted for the touchpanel 17.

If the power supply of the image processing apparatus 1 is in an image capture mode, the main operation control unit 53 controls the display control unit 54 to cause the LCD 16 to display video data input from the CCD 51. The main operation control unit 53 also causes the signal processing section 71 to perform a predetermined signal process on the video data input from the CCD 51, and one of the recording medium 31 and the recording medium 32 to record the signal processed video data via a recording/playback control unit 55.

The video data includes video data of a still image, and video data of a moving image.

When the power supply of the image processing apparatus 1 is in a playback mode, the main operation control unit 53 activates the playback mode, and controls the signal processing section 71, the setting processing section 72, the image-data generating section 73, and the display control unit 54 to cause the LCD 16 display an image responsive to the data stored on one of the recording medium 31 and the recording medium 32.

The playback modes include a still image mode for playing back a still image and a moving image mode for playing back a moving image.

The signal processing section 71, including a multiplexer and a demultiplexer, performs a predetermined signal process on the video data input from the CCD 51, including encoding and multiplexing, and supplies the processed video data to the recording/playback control unit 55. The signal processing section 71 further receives the video data, stored on one of the recording medium 31 and the recording medium 32, via the recording/playback control unit 55, decodes the input video data, and expands the decoded video data on a memory 56.

When the user sets a desired function, the setting processing section 72 controls the process of setting the function. The image-data generating section 73 superimposes data of an icon on data of a still image stored on the memory 56, generates display data, and supplies the display control unit 54 with the generated display data.

The display control unit 54 causes the LCD 16 to display an image responsive to the display data from the image-data generating section 73.

The recording/playback control unit 55 stores the video data signal processed by the signal processing section 71 onto one of the recording medium 31 and the recording medium 32. The recording/playback control unit 55 further reads video data stored on one of the recording medium 31 and the recording medium 32, and supplies the signal processing section 71 with the read video data.

The memory 56, composed of one of a random-access memory (RAM) and a read-only memory (ROM), stores the video data expanded by the signal processing section 71. The memory 56 also stores data for displaying an icon and a cursor. A table storage unit 57 stores a plurality of tables to be discussed later. The tables stored there are related to functions and set values of the image processing apparatus 1. The memory 56 and the table storage unit 57 are shown separately herein. Alternatively, the memory 56 can store the tables that are otherwise stored on the table storage unit 57.

The image processing apparatus 1 of Fig. 2 can also receive input audio data and perform a predetermined signal process on the audio data, and emits a sound from a loudspeaker. The operation of the image processing apparatus 1 in response to the audio data is neither shown nor discussed herein.

Elements of the image processing apparatus 1 related to a display process of displaying icons are described below with reference to Fig. 3.

The image processing apparatus 1 of the present embodiment handles a still image and a moving image. Recording operation and playback operation are performed on different recording media including the recording medium 31 and the recording medium 32. For example, an icon for use in the recording of a still image may be different from an icon for use in the recording of a moving image. Furthermore, an icon for use in the recording operation performed on the recording medium 31 may be different from an icon for use in the recording operation performed on the recording medium 32.

The number of icons displayed on the LCD 16 (presented to the user) may be large, and the user may not always be familiar with all icons presented. In accordance with the present embodiment, a mechanism is provided to allow the user to immediately check a displayed icon with a simple operation if the user is unable to recognize the meaning of that icon. Such a mechanism is discussed with reference to Fig. 3.

As shown in Fig. 3, the table storage unit 57 includes five tables of a first area table 101, a second area table 102, a third area table 103, a fourth area table 104, and a fifth area table 105. As will be discussed later, in accordance with the present embodiment, the display screen of the LCD 16 includes four to five selectable areas. The five tables corresponding to the five areas are stored in the table storage unit 57. Depending on the number of areas arranged on the screen, the number of tables stored in the table storage unit 57 is determined.

The following discussion is based on the assumption that the table storage unit 57 stores the five tables. An area detecting portion 111 is arranged on the image-data generating section 73. In response to a signal from the touchpanel 17, the image-data generating section 73 detects whether any area on the screen is touched (selected). The image-data generating section 73, further including a list creating portion 112, performs a process of creating a display list to be discussed later.

The image-data generating section 73 generates display data based on the display list created by the list creating portion 112, and supplies the display control unit 54 with the created display data. The display control unit 54 controls the displaying of the screen on the LCD 16 in response to the display data supplied.

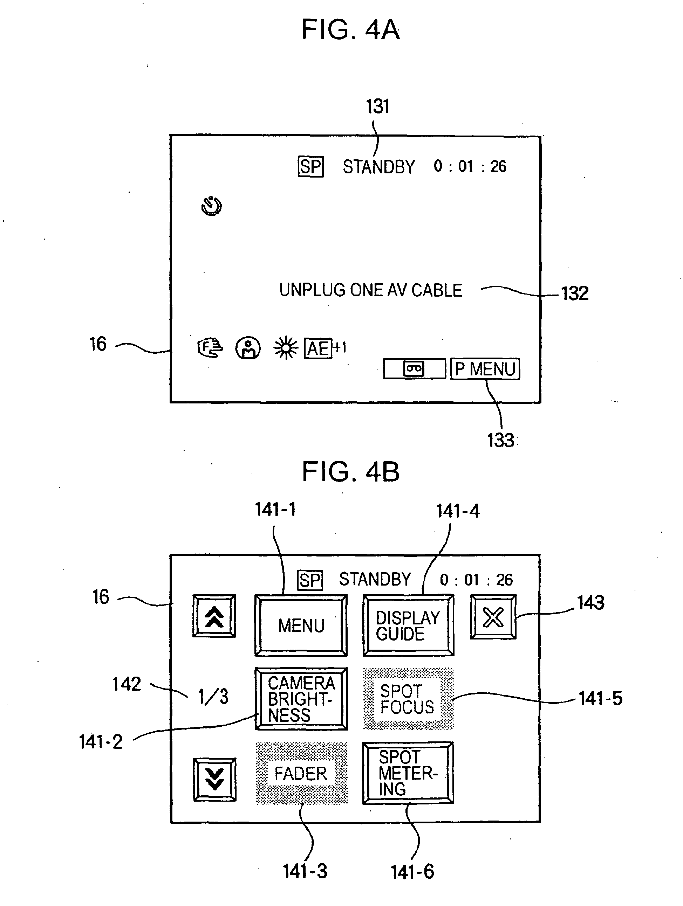

The screen presented on the LCD 16 controlled by the display control unit 54 is described below. Referring to Figs. 4A and 4B through 6, the switching of screens (the transition of screens) is described below.

Figs. 4A and 4B illustrate examples of the screen presented on the LCD 16. Fig. 4A illustrates an initial screen. The initial screen is presented in response to a mode set at any given moment, for example, when power of the image processing apparatus 1 is turned on.

A state display part 131 is arranged on the top portion of the screen of Fig. 4A. The state display part 131 displays information as to whether the image processing apparatus 1 is in a recording state. As shown in Fig. 4A, the image processing apparatus 1 is on a standby state, not in the recording state. Fig. 4A also illustrates, on the approximate center of the screen, an instruction display part 132 where an instruction message for the user is displayed. A button 133 labeled "P. MENU" is arranged on the lower right corner of the screen.

The button 133 is used to display a personal menu. The personal menu is composed of setting items preferred by the user. If the button 133 is selected (if a region of the button 133 is touched by the user), the screen of Fig. 4B appears.

The screen of Fig. 4B is an example of the personal menu set by the user. Six items 141-1 through 141-6 are displayed on the screen of Fig. 4B. The six items are displayed on one screen herein, but the number of items can be other than six. The number of items can be set by the user. If the items cannot be displayed in a single screen, a scroll part 142 arranged on the left-hand side of the screen can be operated.

At a given moment of time, some of the displayed items can be selected while the remaining items cannot be selected. Whether an item can be selected or not is distinguished on the screen. As shown in Fig. 4B, selectable items are 141-1, 141-2, 141-4, and 141-6, and nonselectable items are 141-3 and 141-5.

A button 143 arranged near the upper right corner of the screen is operated to return the LCD 16 to the screen of Fig. 4A (to close the personal menu).

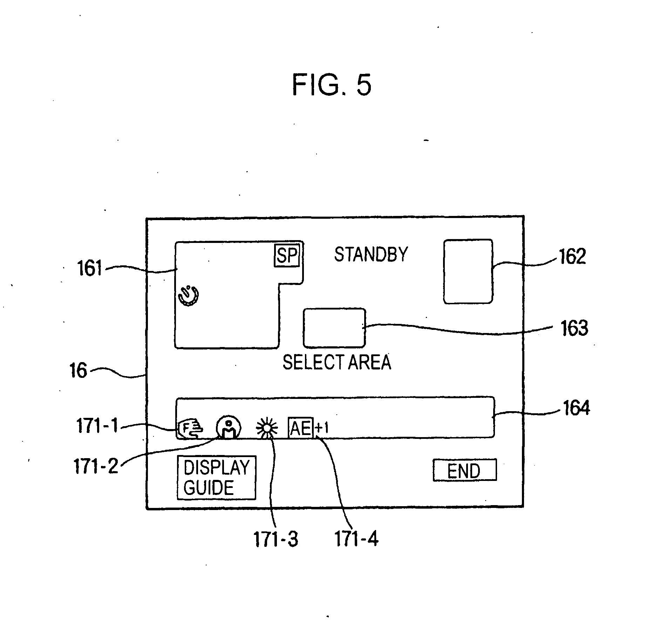

If a "display guide" button for the item 141-4 is selected on the screen of the personal menu of Fig. 4B, the LCD 16 is switched to the screen of Fig. 5.

The screen of Fig. 5 (hereinafter referred to as an area selection screen) is used for the user to select an area to be displayed as a display guide. The item 141-4 for the display guide is operated when the user wishes to know the meaning of an icon displayed on the initial screen of Fig. 4A. The "display guide" refers to the displaying of the meaning of an icon (description of the icon) displayed on the initial screen.

The area selection screen of Fig. 5 includes four areas. An area 161 is arranged near the top left corner of the screen, an area 162 is arranged near the top right corner of the screen, an area 163 is arranged on the center of the screen, and an area 164 is arranged on the lower portion of the screen. Information relating to the icons displayed on the area 161 is managed by the first area table 101 (Fig. 3), information relating to the icons displayed on the area 162 is managed by the second area table 102, information relating to the icons displayed on the area 163 is managed by the third area table 103, and information relating to the icons displayed on the area 164 is managed by the fourth area table 104.

In the comparison of the initial screen of Fig. 4A with the area selection screen of Fig. 5, the same icons are displayed on the same locations. The screen of Fig. 5 indicates to the user what area each of the icons of the screen of Fig. 4A is located at. An instruction message reading "select area" is displayed on the instruction display part 132 on the screen of Fig. 5.

Only the icons on the initial screen are displayed on the area selection screen.

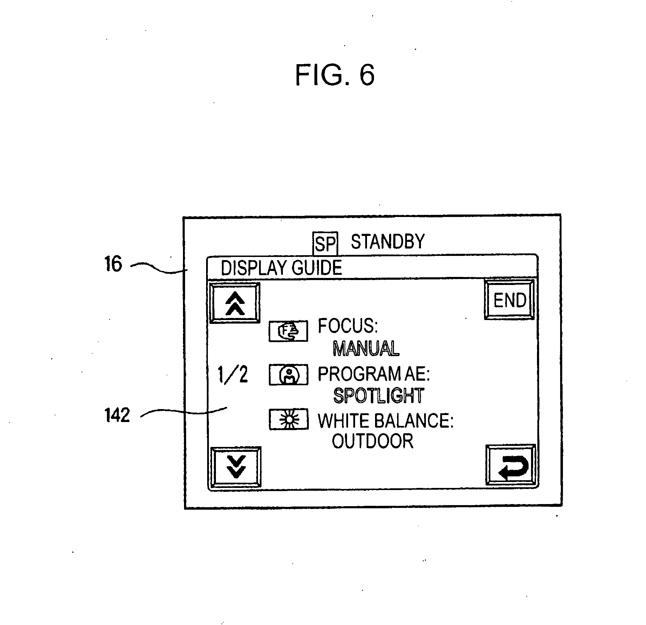

When the user views the area selection screen of Fig. 5 and selects an area of an icon the meaning of which the user wishes to know, the LCD 16 switches to a screen of Fig. 6. The screen of Fig. 6 (hereinafter referred to as a display guide screen) is displayed when the area 164 is selected on the screen of Fig. 5. As shown in Fig. 5, the area 164 displays four icons 171-1 through 171-4. The meanings of the icons 171-1 through 171-4 are displayed on the display guide screen of Fig. 6.

The description of the meaning of each icon includes an icon, the name of an item indicated by the icon (for example, focus), and a set value indicating how that item is set (for example, manual). The "meaning of each icon" displayed on the display guide screen is referred to as an item as appropriate.

The meanings of three icons 171-1 through 171-3, out of the icons 171-1 through 171-4, are shown on the screen of Fig. 6. In view of the size of the display screen of the LCD 16, it is now assumed that a maximum of three icons (items) are displayed on one screen.

On the screen of Fig. 6, the icon 171-1 means "focus" and that the focus is set at "manual" at that moment. Similarly, each of the other icons displays the name of the item of the respective icon, and the value of the item set.

If an area is selected on the area selection screen of Fig. 5, the meanings of only the icons displayed on the area are displayed on the display guide screen.

If the user is not familiar with any icon displayed on the initial screen of Fig. 4A, the user selects the button 133 and selects the item 141-4 for the "display guide" on the menu screen of Fig. 4B displayed in response to the selection of the button 133. In response, the area selection screen of Fig. 5 is then presented to the user to allow the user to select an area in which an icon having the meaning unknown to the user is present. When the area bearing the icon having the meaning unknown to the user is selected, the meaning of the icon displayed in the selected area is displayed on the display guide screen of Fig. 6.

With such a simple operation, the user can easily check the meaning of an icon unfamiliar or unknown to the user.

As discussed above with reference to Figs. 4A and 4B through 6, the display guide screen (Fig. 6) is displayed finally. Alternatively, the display guide screen may be displayed by switching the screen as described below.

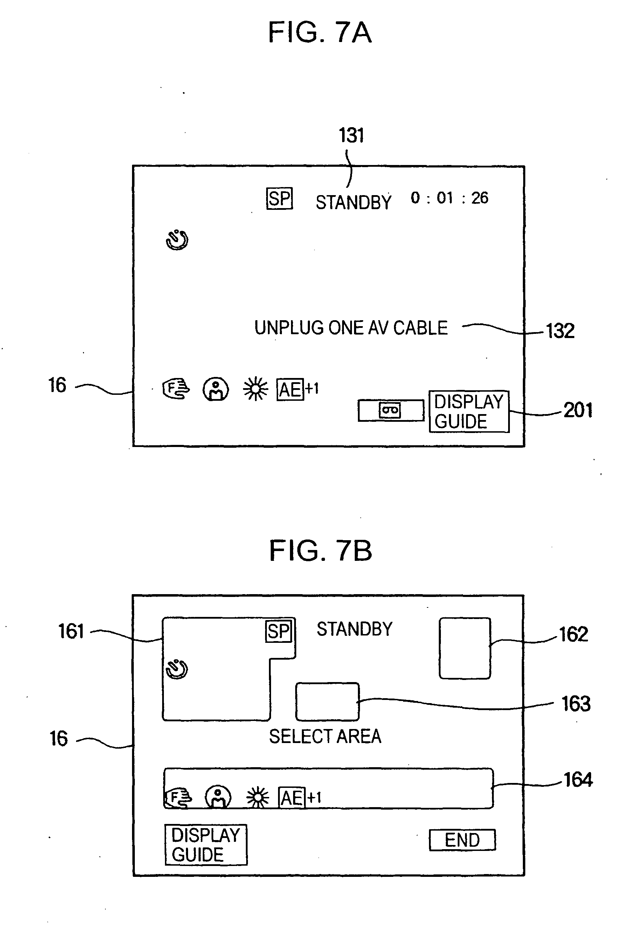

Fig. 7A illustrates one example of the initial screen. In the comparison of the initial screen of Fig. 4A with the initial screen of Fig. 7A, a button 201 for "display guide" is substituted for the button 133 for the "P. MENU" on the initial screen of Fig. 4A. The remaining portion of the initial screen of Fig. 7A remains unchanged from the initial screen of Fig. 4A.

If the button 201 for "display guide" is selected, the LCD 16 is switched to the screen of Fig. 7B, similar to the area selection screen of Fig. 5. With the button 201 for "display guide" arranged on the initial screen, the displaying of the menu selection screen of Fig. 4B can be skipped.

In the arrangement with the screen of Fig. 4B eliminated, the user views the initial screen of Fig. 7A, and selects the button 201 if an unfamiliar icon is displayed. The area selection screen to allow the user to select an area bearing an unfamiliar icon is then displayed as shown in Fig. 7B (Fig. 5). If the area bearing the icon unknown to the user is selected from the area selection screen, the meaning of the icon displayed in the selected area is displayed on the display guide screen as shown in Fig. 6.

With the button 201 for "display guide" arranged on the initial screen as shown in Fig. 7A, the user can display the display guide screen with a simple operation.

In this way, the display guide screen is displayed with the menu screen of Fig. 4B displayed or with the displaying of the menu screen of Fig. 4B skipped. Whether or not to display the display guide screen with the displaying step of the menu screen of Fig. 4B skipped may be set at the design stage of the apparatus or may be left to the user's choice.

The use of the menu screen of Fig. 4B means one additional screen (one additional step) before reaching the display guide screen. However, the menu screen displays only the menus preferred by the user. If an item other than the item 141-4 for the display guide is selected and set, a process desired by the user is performed with a simple operation. User friendliness of the image processing apparatus 1 is thus enhanced.

Optionally, both the button 133 of "P. MENU" and the button 201 of "display guide" may be displayed on the same screen to allow the user to reach the display guide screen regardless of whether the button 133 or the button 201 is selected.

Display examples of the initial screen and the area selection screen are described below.

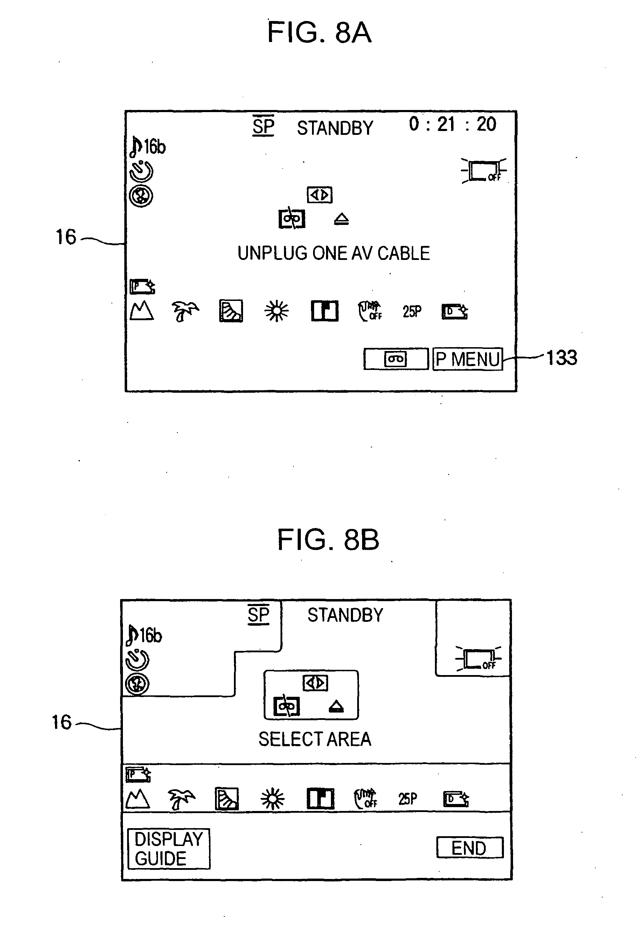

Fig. 8A illustrates an initial screen for recording data of a moving image onto the recording medium 31 (Fig. 2), and Fig. 8B illustrates an area selection screen corresponding to the initial screen. The recording medium 31 herein is a tape-like recording medium.

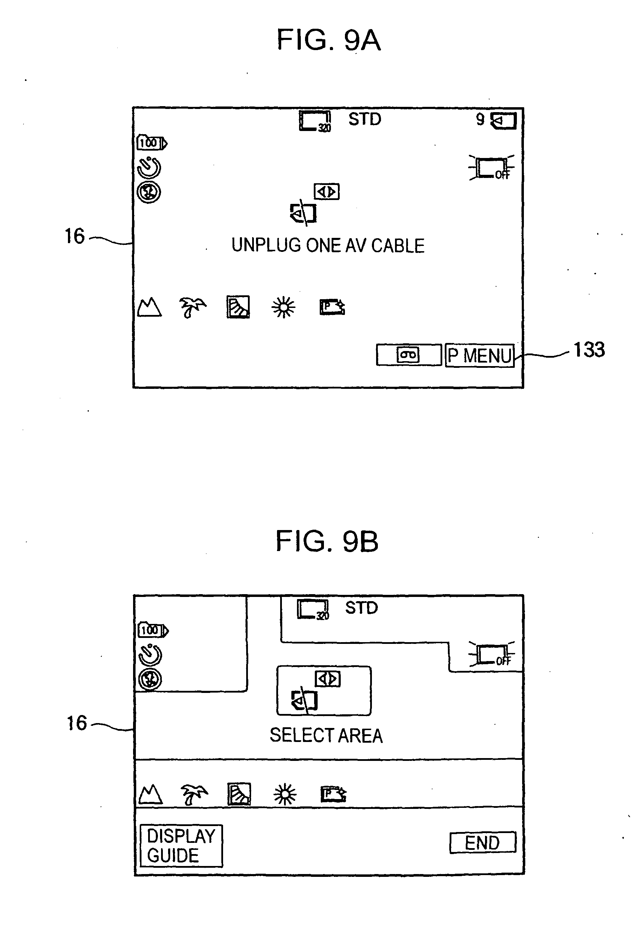

Fig. 9A illustrates an initial screen for recording data of a still image onto the recording medium 32 (Fig. 2), and Fig. 9B illustrates an area selection screen corresponding to the initial screen. The recording medium 32 herein is a card-like recording medium.

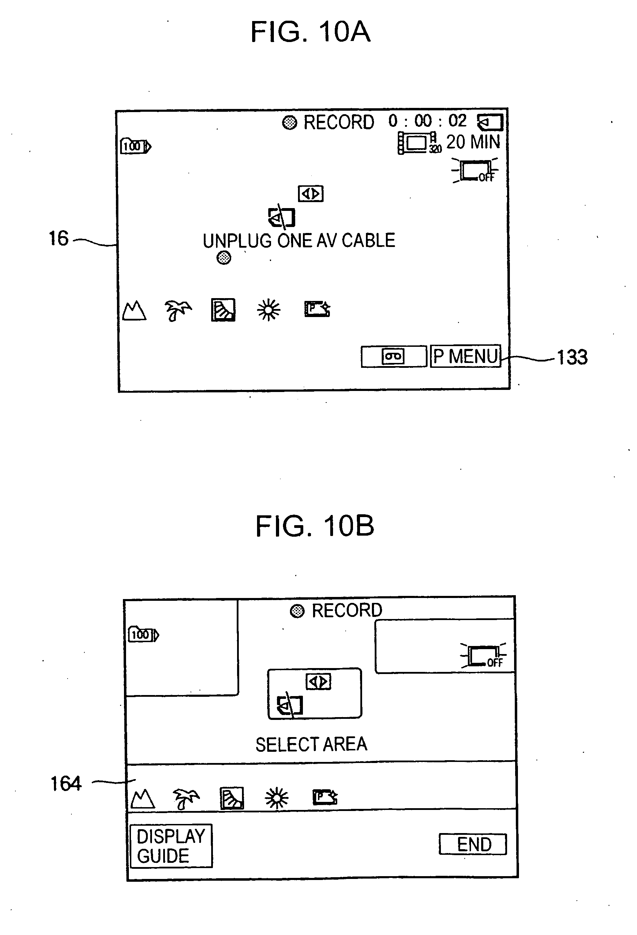

Fig. 10A illustrates an initial screen for recording data of a moving image onto the recording medium 32, and Fig. 10B illustrates an area selection screen corresponding to the initial screen.

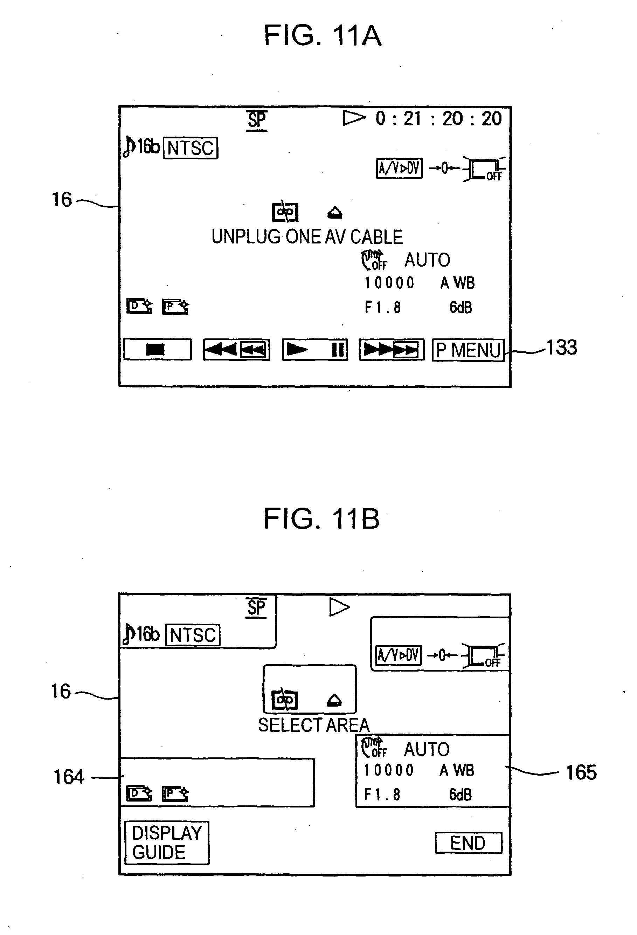

Fig. 11A illustrates an initial screen for playing back and editing data recorded on the recording medium 31, and Fig. 11B illustrates an area selection screen corresponding to the initial screen.

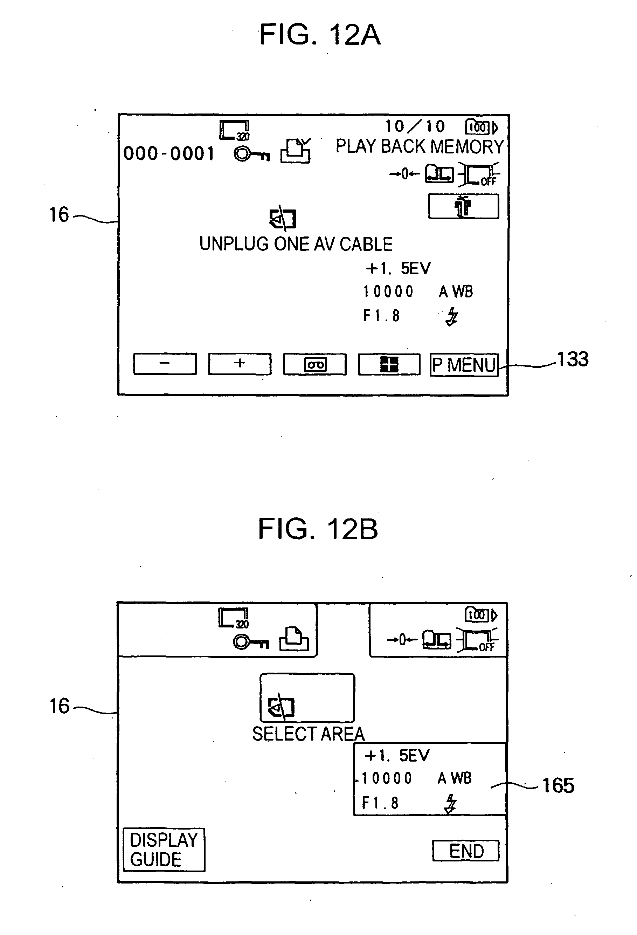

Fig. 12A illustrates an initial screen for playing back and editing data recorded on the recording medium 32, and Fig. 12B illustrates an area selection screen corresponding to the initial screen.

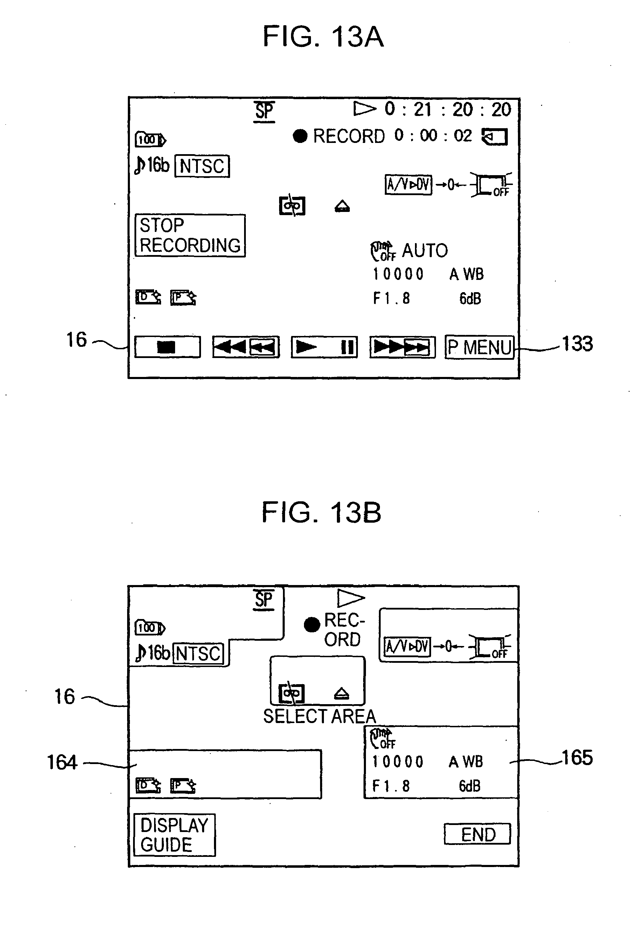

Fig. 13A illustrates an initial screen for moving data recorded on the recording medium 31 to the recording medium 32 or for moving data recorded on the recording medium 32 to the recording medium 31, and Fig. 13B illustrates an area selection screen corresponding to the initial screen.

With reference to Figs. 8A through 13A, the icons displayed on the initial screen become different depending whether the process is performed on the recording medium 31 or the recording medium 32. The icons displayed on the initial screen also become different depending on whether the process is a recording operation or a playback operation. The displayed icons also become different depending on the set function and value. The initial screen is modified as appropriate depending on the item to be processed, the content of each process, and set values.

With reference to Figs. 8B through 13B, the size and shape of each area are also modified as appropriate depending on the initial screen.

With reference to Figs. 11B and 13B, the area 164 is arranged on the lower portion of the area selection screen corresponding to the initial screen for playing back the data recorded on one of the recording media 31 and 32. The area 164 here is smaller in size than the area 164 arranged on the lower portion of the area selection screen (Fig. 8B) corresponding to the initial screen for recording data onto one of the recording media 31 and 32. As the area 164 is reduced in size, an area 165 is newly arranged. The area 165, different in meaning from the areas 161 through 164, will be described later.

The size of each area is modified as necessary, and the number of areas is also modified.

The area selection screen of Fig. 12B has no area 164. In this way, there can be some areas that are not displayed on the area selection screen.

The size and the shape of each area are variable depending on the number of displayed icons and display locations. Alternatively, the size and the shape of each area may be invariable.

The advantage of arranging the areas is described below. In accordance with the present embodiment, the user can display the meaning of an unfamiliar icon on the display guide screen by selecting an area bearing the unfamiliar icon therewithin. It is contemplated that the user selects only an icon unknown to the user to display the meaning of that icon.

If the image processing apparatus 1 is a mobile apparatus such as a digital video camera, the size of the LCD 16 permitted within the image processing apparatus 1 is subject to limitation. To display a plurality of icons on the LCD 16, the size of each icon needs to be relatively small. If a number of icons are displayed on a single screen, the size of each icon needs to be relatively small.

If the size of each icon is small, the user may have difficulty in selecting each icon by touching the touchpanel 17. In other words, when the user attempts to select one of icons to know the meaning of that icon by touching the region of that icon, the user is likely to touch another icon in the vicinity of the icon of interest. The user thus cannot check the meaning of the icon of interest.

To identify whether one small icon is touched, the touchpanel 17 needs to accurately detect a location of touch and an element for processing a signal from the touchpanel 17 needs to perform a high-accuracy level process. Such a design involves a high development cost and a long development time.

As previously discussed, a plurality of icons are handled as a collection, and a region where the collection of icons is collectively handled as a unit is referred to as an area. Each area is then displayed on the area selection screen for selection.

With the area selectable, the user can simply select a relatively larger zone. To select an icon to learn the meaning thereof, the use is less likely to erroneously select an undesired icon.

The image processing apparatus 1 even with a less accurate touch panel employed therewithin reliably detects the location touched by the user if the area is relatively large.

By allowing the icons within an area to be associated with each other, the user gets the impression that the icons within the area of interest have some sort of association with each other after selecting that area by several times.

Even without full understanding of the icon, the user under such an impression can still guess the meaning of the icon by recognizing the position (area) of the displayed icon.

In view of this, an icon displayed in each area and the meaning of the icon are discussed. In the discussion that follows, all icons that can be displayed on each area are not necessarily discussed, and the icons are not limited to those to be discussed herein.

It is possible to store icons and the meanings of those icons. These pieces of information are stored in the table storage unit 57 (Fig. 3).

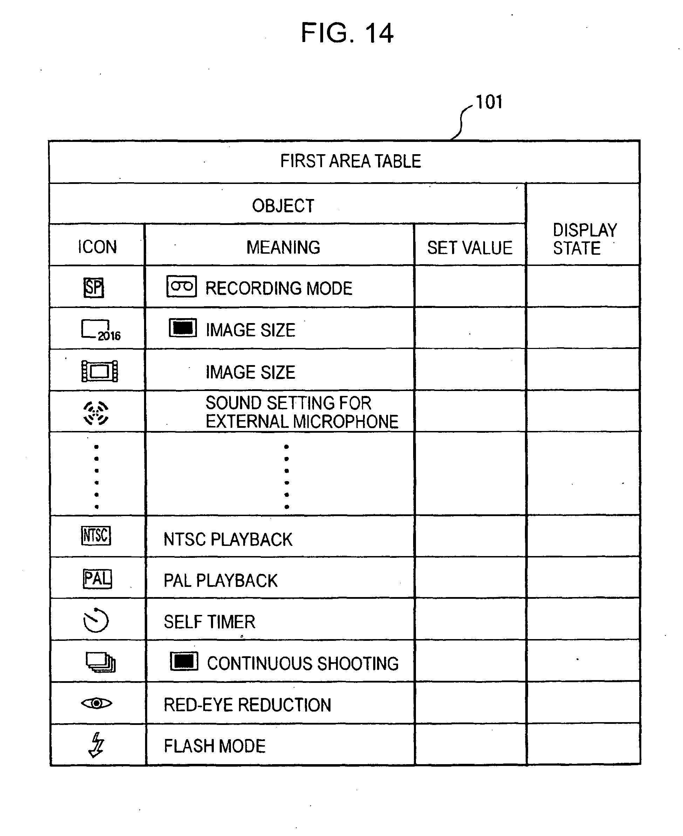

Fig. 14 illustrates the first area table 101 from among the tables stored in the table storage unit 57. The first area table 101 is used to manage the icons displayed on the area 161 (of Fig. 5, for example). The icons displayed on the area 161 (managed by the first area table 101) are related to the recording of data.

As shown in Fig. 14, the first area table 101 manages the icons, meanings, set values, and display states with one component in association with each other. In the discussion that follows, the icon, meaning, and set value are respectively referred to as an object. For example, the expression reading "an 'object' is displayed" means a state that at least one of an icon, meaning, and set value is displayed.

Icon shape is managed at an "icon" column in the first area table 101 displayed on the screen of the LCD 16. The name of an icon (such as a set name, or a general name representing the icon) is managed at a "meaning" column. Information indicating the setting of the function of the icon is managed at a "set value" column. Information indicating whether the corresponding icon is displayed on the LCD 16 is managed at a "display state" column.

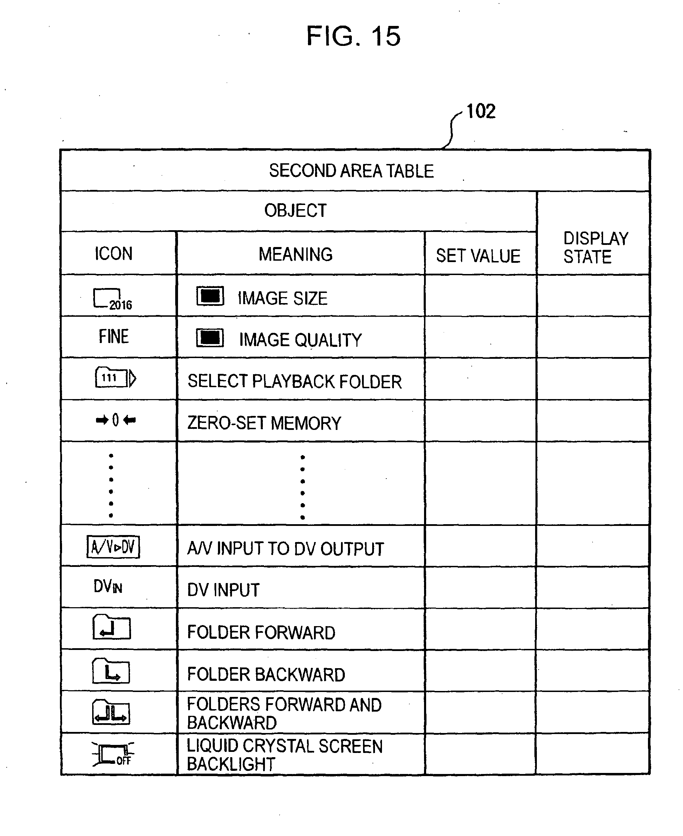

The structure of the first area table 101 is identical to those of the second area table 102 through the fifth area table 105 discussed with reference to Figs. 15 through 18. In the later discussion of each of the tables 102 through 105, the structure of each table is thus omitted.

As shown in Fig. 14, icons related to recording includes an icon indicating a recording mode, an icon indicating the size of an image during recording, and an icon indicating that sound pickup during recording is performed by an externally connected microphone. To record image picked up by the CCD 51 (Fig. 2), the user recognizes the setting by referencing an icon displayed on the area 161.

Fig. 15 illustrates the second area table 102 from among the tables stored in the table storage unit 57. The second area table 102 is used to manage the icons displayed on the area 162 (of Fig. 5, for example). The icons displayed on the area 162 (managed by the second area table 102) are related to an input source and an output destination of each of the recording medium 31 and the recording medium 32 (such as a recording destination, and a playback destination).

As shown in Fig. 15, the icons related to the inputting and outputting include icons indicating the size and quality of a playback image, and information related to a folder at which playback data is recorded. The user recognizes the inputting and outputting of the image displayed on the LCD 16 by referencing an icon displayed on the second area table 102.

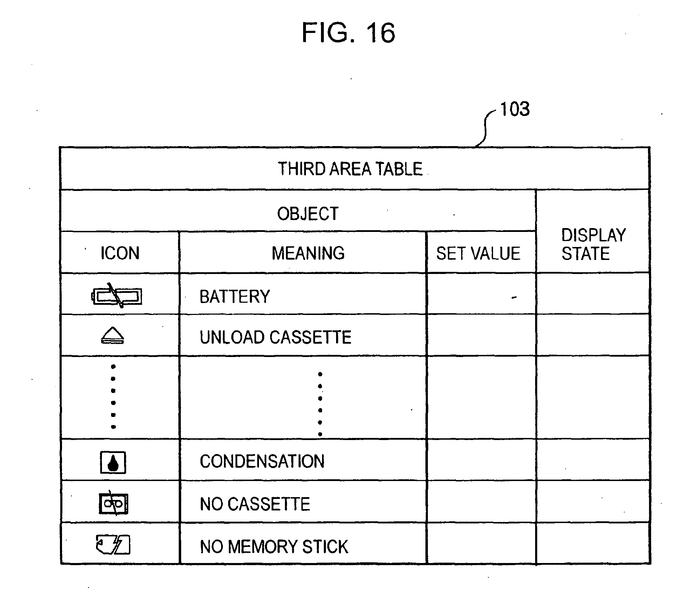

Fig. 16 illustrates the third area table 103 from among the tables stored in the table storage unit 57. The third area table 103 is used to manage the icons displayed on the area 163 (of Fig. 5, for example). The icons displayed on the area 163 (managed by the third area table 103) are a warning icon and other icons the user needs to recognize.

As shown in Fig. 16, the warning icons include an icon indicating that power remaining in a battery becomes low, an icon indicating that no recording medium is loaded, and an icon that memory space available in a recording medium becomes insufficient. The user thus identifies the cause for a malfunction of the image processing apparatus 1 and whether any setting affects image recording.

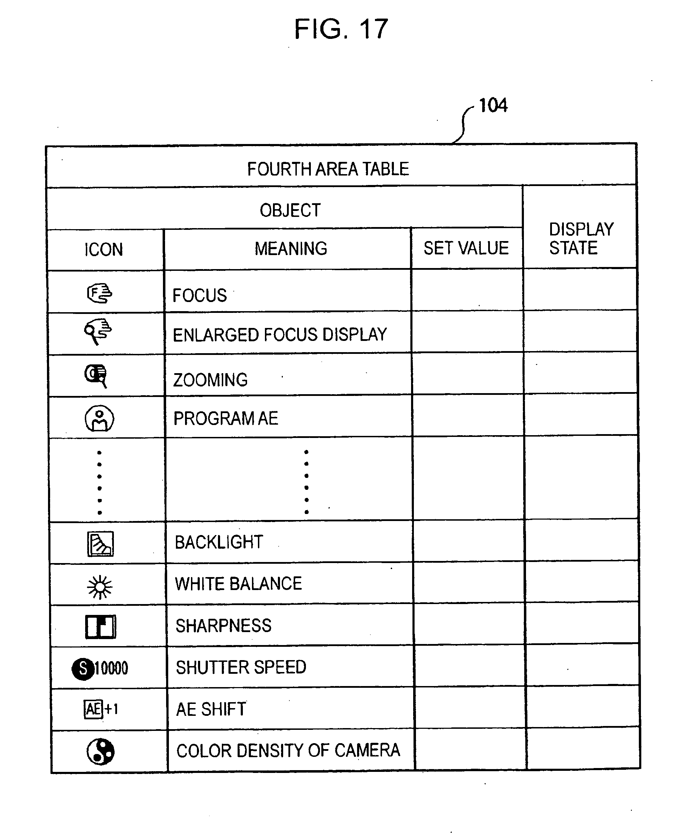

Fig. 17 illustrates the fourth area table 104 from among the tables stored in the table storage unit 57. The fourth area table 104 is used to manage the icons displayed on the area 164 (of Fig. 5, for example). The icons displayed on the area 164 (managed by the fourth area table 104) are related mainly to the setting and manipulation of the quality of images to be recorded.

As shown in Fig. 17, the icons related to the image quality include a focus for setting focus, and an icon displayed for backlight correction. During recording, the user recognizes the setting affecting the quality of images subsequent to recording, by referencing the icons displayed on the fourth area table 104.

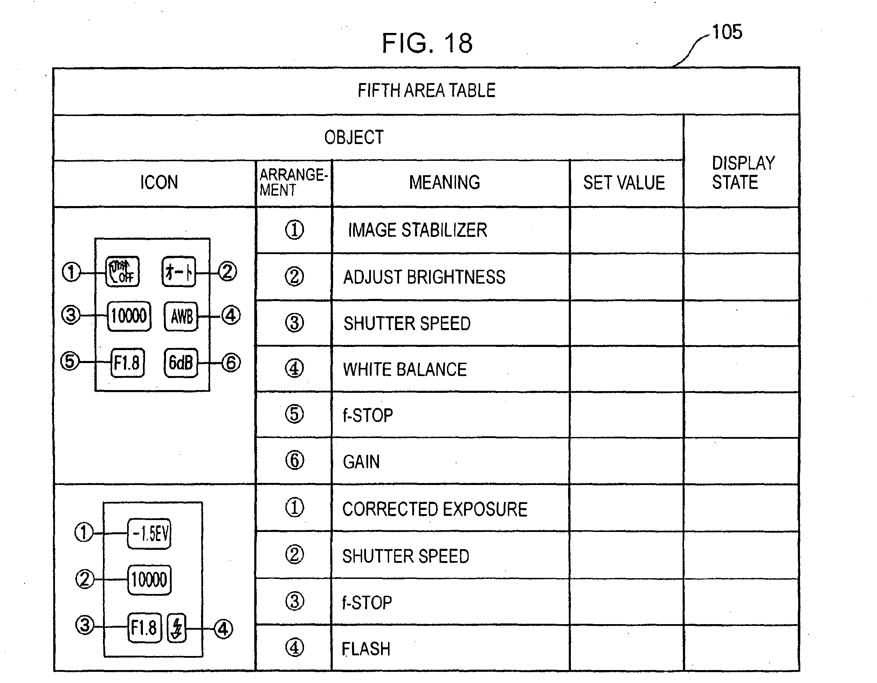

Fig. 18 illustrates the fifth area table 105 from among the tables stored in the table storage unit 57. The fifth area table 105 is used to manage the icons displayed on the area 165 (of Fig. 11, for example). Numbers 1 through 6 in circles shown in Fig. 18 identify the display locations of data in the area 165 for explanation purposes only.

The icons displayed on the area 165 (managed by the fifth area table 105) are related to data codes. The icons displayed on the area 165 are different in nature from the icons displayed on the areas 161 through 164, and have specific values as shown in the area 165 of Fig. 11B.

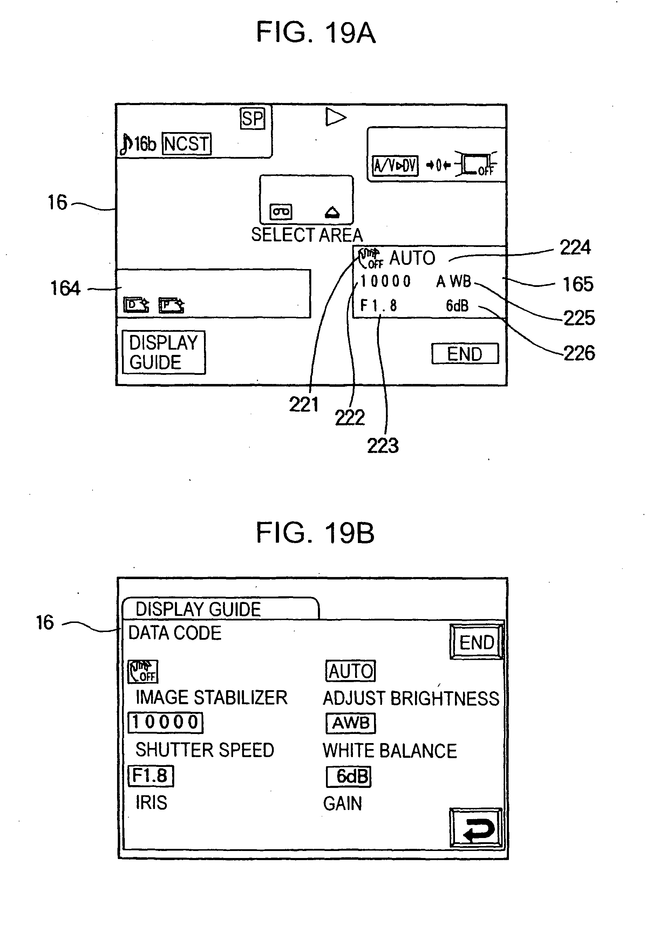

The data code displayed on the area 165 is discussed below. Fig. 19A, similar to Fig. 11B, shows an area selection screen corresponding to an initial screen for playing back and editing the data recorded on the recording medium 31. If the user selects the area 165 on the area selection screen of Fig. 19A, in other words, if the data code is selected, the LCD 16 is switched to a screen of Fig. 19B.

Fig. 19B shows a screen describing six items (six icons) displayed on the area 165 of Fig. 19A. As shown in Fig. 19B, an icon 221 is described as an icon for "image stabilizing". An icon 222 is described as a set value indicating shutter speed (the set value of the shutter speed is "10000"). An icon 223 is described as a set value for "iris" (the set value is "F1.8").

An icon 224, described as being "auto", indicates that "brightness adjustment" is auto. An icon 225, described as being "AWB", indicates that AWB is a value set for white balance. An icon 226 indicates that "6db" is set for "gain".

If the area 165 as a data code is selected, each icon (set value) displayed on the area 165 and the meaning of that icon (description of the set value) are displayed on one screen.

If one icon in the area 165 of Fig. 19A is compared with the corresponding icon of Fig. 19B, their layouts are relatively identical to each other. With the same layout, the user can immediately find the meaning of an icon (set value) unknown to the user in the data code.

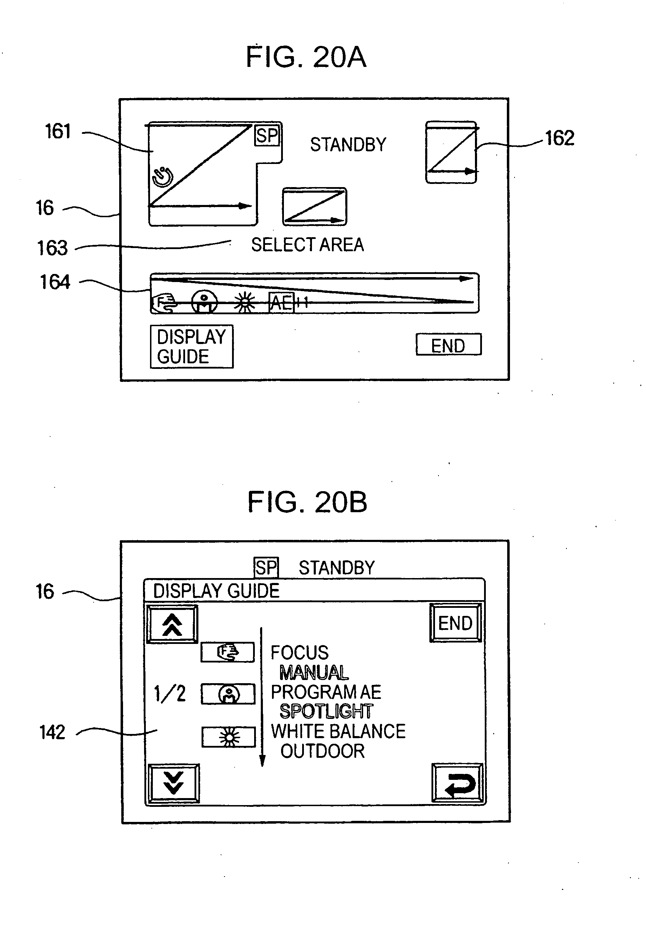

The relationship of the layout of an icon displayed on the area selection screen other than the data code and the layout of an icon (item) displayed on the display guide screen is described below with reference to Figs. 20A and 20B. As shown in Fig. 20A, the display order of icons in the guide display screen is represented by an arrow-headed line.

As for icons displayed in the areas 161 through 163, descriptions (objects) are laid out on the display guide screen in the display order from left to right, and from up to down in the letter Z path. As for icons displayed in the area 164, descriptions (objects) are laid out on the display guide screen in the display order from left to right and from down to up.

Fig. 20B illustrates the display guide screen that is presented when the area 164 is selected from the screen of Fig. 20A. Since the display order of the icons in the area 164 is controlled to be from left to right from down to up, "focus", "program AE", and "white balance" are displayed in that order.

As shown in Fig. 20B, the objects are displayed from up to down on the display guide screen. If objects of only two icons are displayed on the display guide screen, the two objects are displayed from up to down with the lowest portion left blank (such an example is not shown here).

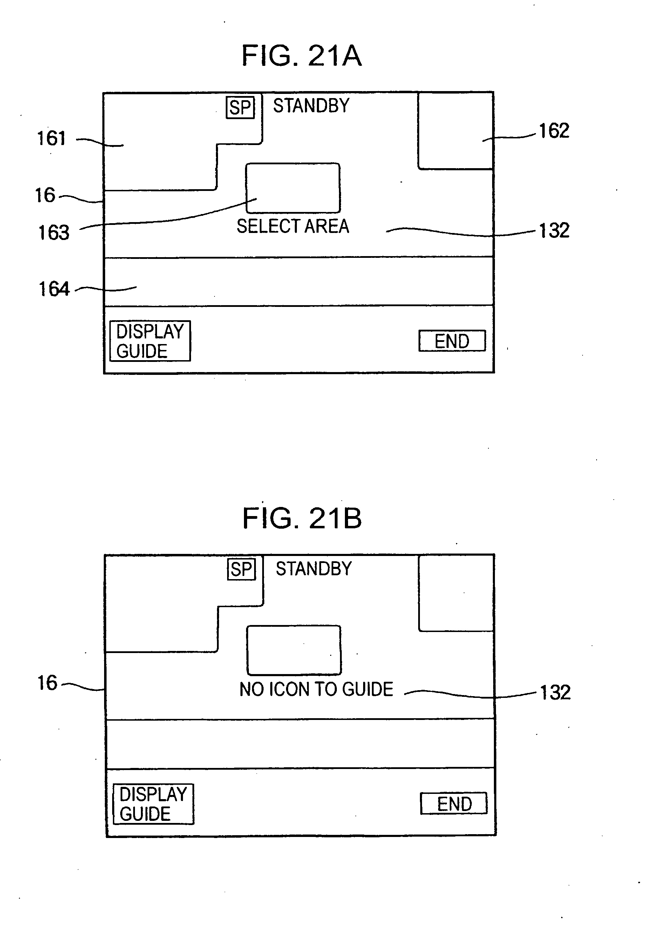

In the above discussion, icons are displayed in each area. There can be an area that has no icon at all, depending on the setting state of the image processing apparatus 1. For example, no icons are shown in each of the areas 162, 163, and 164 as shown in Fig. 21A. If an area having no icon is selected, the LCD 16 is switched to a screen of Fig. 21B.

The user thus selects the area having no icon. To notify the user that the area having no icon has been selected, a message reading "no display to guide ", for example, is shown on the instruction display part 132 as shown in Fig. 21B. Such a message is displayed for a predetermined period of time, for example, 5 seconds. After time elapse of the predetermined period of time, the LCD 16 is automatically switched to the screen of Fig. 21A without any user intervention.

If an icon is present within a selected area, the meaning of that icon is displayed. If an icon is not present within a selected area, a message notifying so the user is displayed.

Referring back to Figs. 21A and 21B, the screen of Fig. 21A and the screen of Fig. 21B are identical except the message. In other words, although an area is selected from the area selection screen of Fig. 21A, areas are displayed for selection (on the area selection screen) even on the screen of Fig. 21B. The user is able to select an area even on the screen of Fig. 21B.

If the user selects an area bearing an icon therewithin on the screen of Fig. 21B, the LCD 16 is switched to the display guide screen displaying the description of that icon. If the user selects an area having no icon therewithin on the screen of Fig. 21B again, the LCD 16 remains on the screen of Fig. 21B (for the predetermined period of time, 5 seconds, for example).

Even if the user erroneously selects an area having no icon therewithin, the apparatus draws user's attention to the erroneous operation to allow the user to correctly respond. The user can select an area on the screen of Fig. 21B rather than selecting an area after returning back to the screen of Fig. 21A.

If an icon the user is unfamiliar with is displayed, the LCD 16 is changed from one screen to another to display the description of that icon. Control of the screen changing is described below.

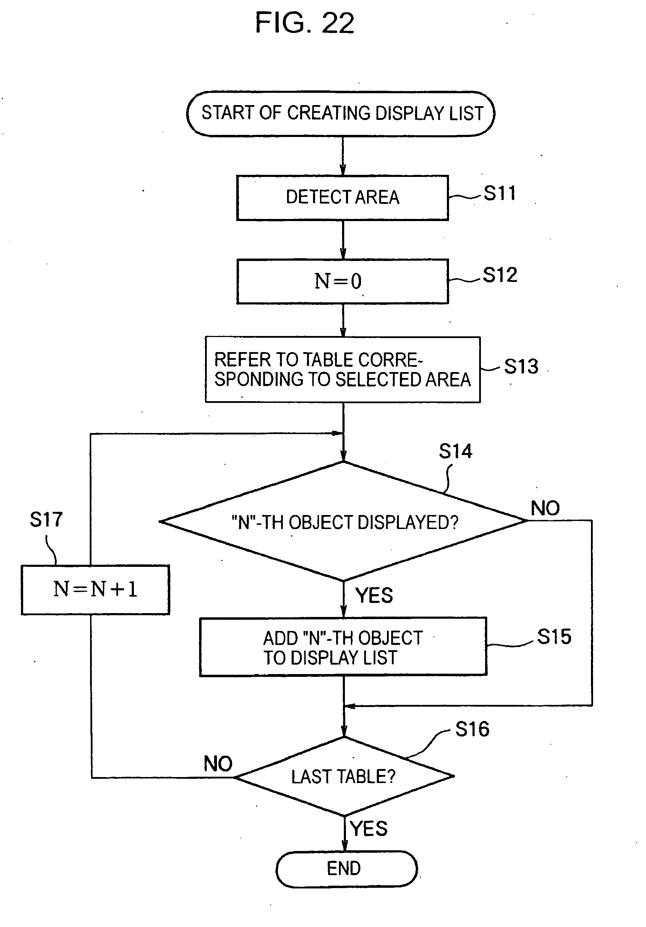

Fig. 22 is a flowchart illustrating a process of creating a display list. The display list is displayed on the display guide screen (of Fig. 6, for example) related to an icon displayed in an area if that area is selected from the area selection screen (of Fig. 5, for example). The process of the flowchart of Fig. 22 is performed as a process performed by the elements of Fig. 3 for displaying. The process of this flowchart is performed when the area selection screen of Fig. 5 is displayed on the LCD 16.

In step S11, the area detecting portion 111 (Fig. 3) detects, in response to a signal supplied from the touchpanel 17, which of the areas 161 through 164 (areas 161 through 165 if the area of the data code of Fig. 19A is also displayed) is selected.

In step S11, the area selected by the user is thus detected. In step S12, the list creating portion 112 sets a variable N to zero (initial value). The variable N is used to identify an object managed by the tables stored in the table storage unit 57. The display order discussed with reference to Fig. 20A can be used as the value of the variable N.

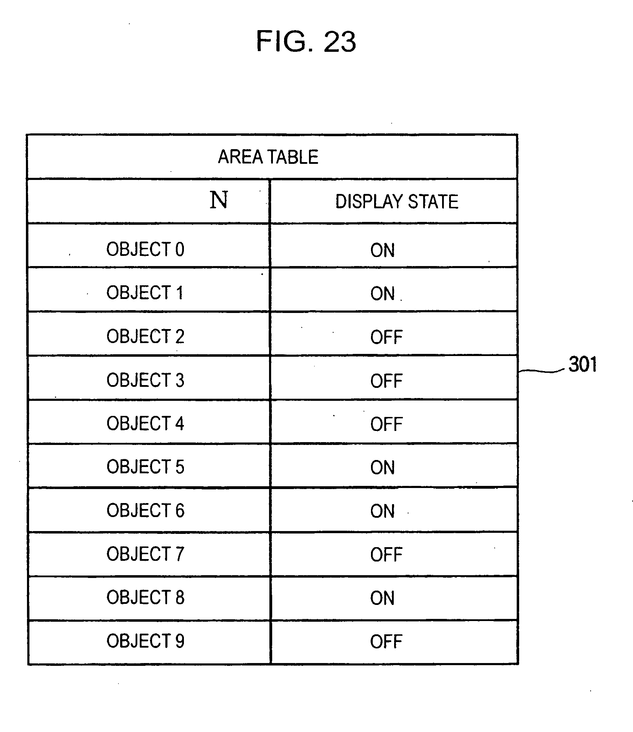

Figs. 14 through 18 show information managed by each of the first area table 101 through the fifth area table 105. The information managed by the first area table 101 through the fifth area table 105 includes the icons, the meanings of the icons, the set values, and the display states with one component in association with another. An area table 301, which is generalized from each of the above area tables, is shown in Fig. 23.

In the area table 301 of Fig. 23 (with the new reference number used to indicate a form generalized from the first area table 101, for example), an object is associated with a display state. As previously discussed, an object contains at least one of an icon, a meaning, and a set value.

The area table 301 of Fig. 23 manages ten objects of 0 through 9 and the display states thereof with one object in association with the respective display state. The objects 0, 1, ..., 9 are listed. The number 0, 1, ..., 9 of the objects herein represent the display order in the area (display order according to which the objects are displayed on the display guide screen), and correspond to N.

In the area table 301, the display order is used to identify at any given moment of time whether or not each object is displayed. At a display state column of the area table 301 of Fig. 23, "on" means that the corresponding object is displayed, and "off" means that the corresponding object is not displayed. Since the "object 0" is "on" in the area table 301 of Fig. 23, the object 0 is displayed at that moment.

To examine the display state of each object in the set display order in the area table 301, N is initialized in step S12. If N is set to zero in step S12, the area table 301 corresponding to the selected area is referenced.

Information related to the area detected by the area detecting portion 111 is supplied to the list creating portion 112. The list creating portion 112 references the area table corresponding to the area detected by the area detecting portion 111, from among the first area table 101 through the fifth area table 105 (the area table 301 is referenced herein).

It is determined in step S14 whether an N-th object is displayed. The list creating portion 112 reads the display state of an object corresponding to the value of N set at the moment from the area table 301 being referenced, and determines whether the object is "on" or "off". If it is determined that the object is "on", processing proceeds to step S15. If it is determined that the object is "off", processing proceeds to step S16 with step S15 skipped.

In step S15, the N-th object determined as being displayed is added to the display list. The display list includes objects that are being displayed.

Subsequent to step S15 or if it is determined in step S14 that the display state of the N-th object is "off", processing proceeds to step S16. In step S16, it is determined whether the list creating portion 112 has verified the referenced area table 301 to the display state of last object (N=9 in the case of the area table 301 of Fig. 23).

If it is determined in step S16 that the list creating portion 112 has not yet verified the area table 301 to the display state of last object, processing proceeds to step S17 where the value of N is incremented by 1, namely, N=N+1. Here, N with 1 added to the value thereof is a new N, and with the new N, steps S14 and subsequent steps are repeated. With step S14 and subsequent steps repeated, the objects displayed in a selected area are successively added to the display list. The display list is thus created based on only the information of the displayed objects.

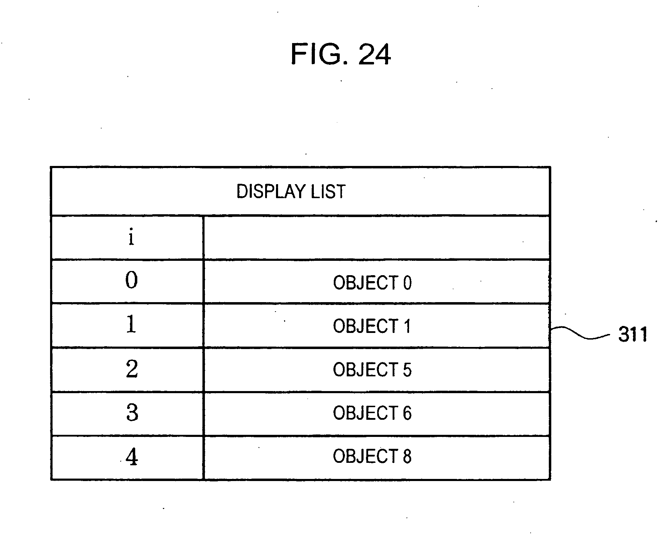

If it is determined in step S16 that the verification of the display state has advanced to last object of the area table 301 (the display state of the ninth object is verified), the process of the display list creation of Fig. 22 is complete. The resulting display list 311 is shown in Fig. 24.

The display list 311 of Fig. 24 is the one that has been created when the area table 301 of Fig. 23 is referenced. Registered in the display list 311 are the objects of the area table 301 of Fig. 23 with the display state thereof being "on", namely, object 0, object 1, object 5, object 6, and object 8.

The display list 311 manages the registered objects with a number "i" associated therewith. The number "i" refers to the order of registration. When the display list is created, the display state is verified in the order of the display order effective on the display guide screen. After all, the order of registration is the display order of the object on the display guide screen.

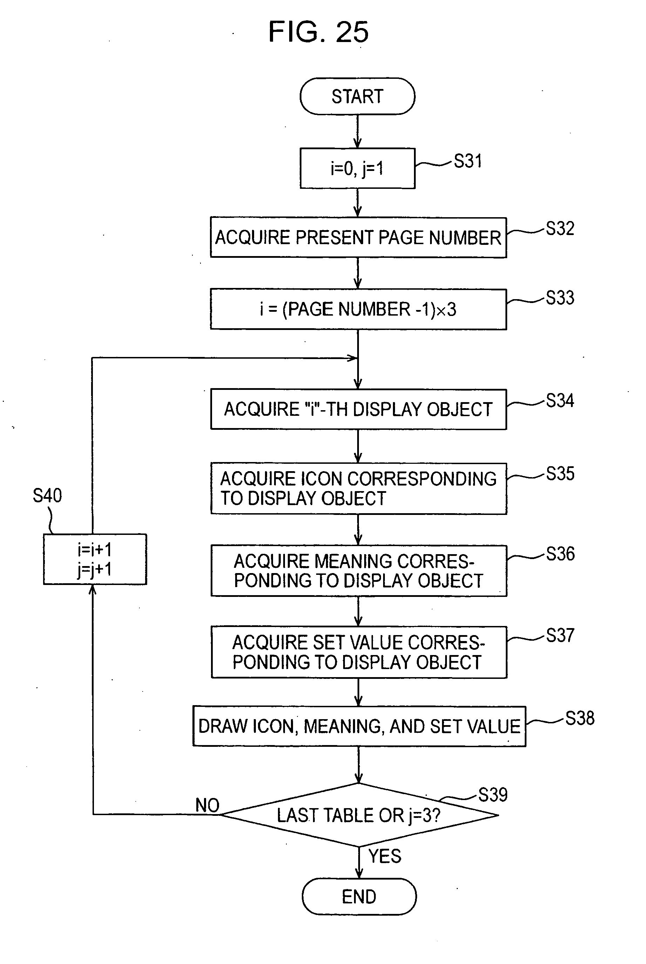

The process of generating display data of the display guide screen from the display list is described below with reference to a flowchart of Fig. 25. The image-data generating section 73 (Fig. 3) performs the display data generation process based on the display list 311 created by the list creating portion 112. In step S31, the image-data generating section 73 sets a variable "i" to zero, and a variable "j" to 1. The variable "i" is a value representing the display order as previously discussed.

The variable "j" is a count value counting the number of items displayed on one page, and in this case, can take 1, 2, or 3. As shown in Fig. 6, the maximum number of items on a single page is "3". If the maximum number of items is set to "5", the variable "j" takes any of the numbers 1 through 5.

When the variables "i" and "j" are initialized in step S31, a present page number is acquired in step S32. If the initialization step is performed with an area selected from the area selection screen (the display guide screen is displayed first), an acquired page number is 1. If the displaying of a next page is instructed by operating a scroll portion 142 (Fig. 6) with no display guide screen displayed, an acquired page number is other than 1, for example, 2, or 3.

If the present page number is acquired in step S32, calculation for determining an object (item) to be displayed is performed in accordance with the following equation (1):

$$i = (\text{page number} - 1) \times 3 \qquad \ldots \quad (1)$$

For example, if the present page number acquired in step S32 is "1", "i" is determined as being 0 in accordance with equation (1). If the present page number acquired in step S32 is "2", "i" is determined as being 3 in accordance with equation (1).

The value calculated by the equation is the value of a first item displayed on any page to be processed (the first item is a topmost object displayed on the screen). If the object number (item number) to be displayed on the top is determined, processing proceeds to step S34. In step S34, the information of an i-th object to be processed at that moment of processing is acquired. For example, if i=0, the information "object 0" is acquired.

In step S35, an icon corresponding to the acquired object is acquired. As previously discussed, the object contains information concerning the icons, the meanings, and the set values with one component in association with another. The objects are managed in the area table 301. By referencing the area table 301, the icon (image data to display the icon) corresponding to the acquired object is acquired.

Similarly, in step S36, the meaning of the acquired object is acquired by referencing the area table 301. In step S37, the set value of the acquired object is acquired.

In step S38, the icon, the meaning, and the set value are drawn using the information relating to the acquired icon, meaning, and set value. More specifically, the image-data generating section 73 draws part of the screen (one item) on the memory 56 (Fig. 2) based on the acquired information.

In step S39, it is determined whether the image-data generating section 73 has processed (drawn) the display list 311 to last object registered therewithin. Furthermore, it is determined whether the variable "j" reaches the maximum number of items on one screen, namely, 3 herein.

If it is determined in step S39 that the processing of the area table 301 has not yet reached last object, and that the variable "j" has not yet reached 3, processing proceeds to step S40. In step S40, the variable "i" is incremented by adding 1 thereto, and the variable "j" is incremented by adding 1 thereto. If the variables "i" and "j" are incremented, step S34 and subsequent steps are repeated on the incremented variables "i" and "j".

If it is determined in step S39 that the processing of the area table 301 has reached last object, and that the variable "j" has reached 3, the display data generation process of Fig. 25 is complete.

With the above-described processes repeated, a screen with the maximum of 3 items, such as the display guide screen of Fig. 6, is drawn on the memory 56. In response to the display drawn on the memory 56, the display control unit 54 controls the displaying of the screen on the LCD 16.

If the user has no knowledge of an icon displayed on the screen, the user can learn the meaning of the icon by displaying the display guide screen. The display guide screen is easily displayed by a simple operation (by simply touching the touchpanel 17 in the above-described embodiments). The number of operation steps is small and not complex.

What is selected to display the display guide screen is an area, and the area is larger in size than a single icon. The possibility of a user's operational error is thus reduced. Since closely related icons are displayed within the same area, the user can learn the meaning of an icon by referencing the location of the icon displayed to the user.

Information displayed on the display guide screen is limited to the icons displayed at that moment. Information the user wishes to know is thus immediately provided. The information displayed on the display guide screen is related to the icons, the meaning of the icons, and the set values of the icons. By simply viewing the display guide screen, the user can learn what function is set at what setting.

In the above discussion of the embodiments, a process subsequent to the displaying of the display guide screen is not described. With the display guide screen displayed, the user recognizes the meaning and the set value of each icon. With the meaning of the icon recognized, the user may wish to modify the set value. To satisfy such a user's need, an icon (item) displayed on the display guide screen may be selected, and the setting of the selected item may be modified.

In the above-referenced embodiments, the information of the icon displayed on the area is displayed on the display guide screen if the area is selected on the area selection screen. The display guide screen is displayed without displaying of the area selection screen (in other words, without the process of selecting the area). If the number of icons displayed on one screen is small (for example, if the number of icons displayed on one screen is equal to or less than a predetermined number), the information relating to all icons displayed on the screen may be displayed on the display guide screen without selecting any area.

In the above discussion, there is no mention that the number of displayed icons changes during the displaying of the area selection screen. In practice, however, the set value can change during the displaying of the area selection screen. If the set value changes, an icon having been displayed may disappear or an icon having not been displayed may appear. For this reason, during the displaying of the area selection screen, the number of displayed icons may be modified as necessary.

If there happens a change in the state of the image processing apparatus 1, the displayed icons may be accordingly modified with the display guide screen displayed. Alternatively, with the display guide screen displayed, no responding action may be taken (for example, the description of a new icon is not added, or the description of an icon is not deleted). If there is any icon unknown to the user, the display guide screen is displayed to display the meaning of the icon. For this reason, adding or deleting an icon with the display guide screen displayed is not preferable in view of user friendliness.

The image processing apparatus 1, such as a video camera, has been discussed. The present invention is not limited to such an apparatus. For example, the present invention is applicable to an apparatus having a function to present some sort of information, such as an icon, to the user.

The series of above-referenced process steps can be executed in hardware or software. If the series of process steps is executed in software, a computer program forming software is installed from a recording medium to a computer built in dedicated hardware or a general-purpose personal computer performing a variety of functions.

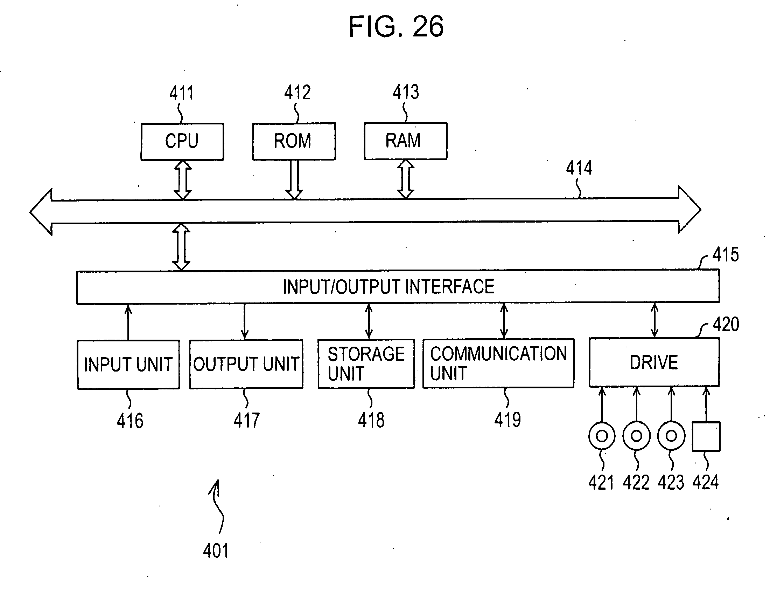

Fig. 26 illustrates the internal structure of the general-purpose personal computer. A central processing unit (CPU) 411 in the personal computer performs a variety of processes in accordance with a program stored on a read-only memory (ROM) 412. A random-access memory (RAM) 413 stores, as necessary, data and programs the CPU 411 needs to perform the variety of programs. An input and output interface 415 connects to an input unit 416 composed of a keyboard and a mouse, and outputs a signal input to the input unit 416 to the CPU 411. The input and output interface 415 also connects to an output unit 417 composed of a display and a loudspeaker.

The input and output interface 415 also connects to a storage unit 418 composed of a hard disk, and a communication unit 419 that exchanges data with another apparatus via an network such as the Internet. A drive 420 is used to write data to and read data from each of recording media including a magnetic disk 421, an optical disk 422, a magneto-optical disk 423, and a semiconductor memory 424.

As shown in Fig. 26, the recording media may be package media supplied separately from the personal computer to supply the program to a user, and storing the program. The package media includes the magnetic disk 421 (including a flexible disk), the optical disk 422 (such as a compact disk read-only memory (CD-ROM), or a digital versatile disk (DVD)), the magneto-optical disk 423 (including mini-disk (MO®), and the semiconductor memory 424. The package media also include the ROM 412 and the storage unit 418 including a hard disk, each supplied in the computer to the user and storing the program.

The process steps discussed in this specification are sequentially performed in the time series order as stated. Alternatively, the steps may be performed in parallel or separately.

The system in this specification includes a plurality of apparatuses.

Embodiments provide an image processing apparatus including a storage unit for storing icons to be displayed on a display screen, and a table managing information relating to the icons, a creating unit for creating a list registering only displayed icons by referencing the table, and a generating unit for generating display data of the icons registered in the list and of the information relating to the icons, by referencing the table.

In so far as the embodiments of the invention described above are implemented, at least in part, using software-controlled data processing apparatus, it will be appreciated that a computer program providing such software control and a transmission, storage or other medium by which such a computer program is provided are envisaged as aspects of the present invention.

**EP 1 674 993 B1**

**Claims**

1. A display apparatus comprising:

storage means (57) for storing icons to be displayed on a display screen (16), and a table managing information relating to the icons;
wherein the information relating to the icons comprises a name of a function represented by an icon and a value set for the function;
creating means (112) for creating a list registering only icons displayed on an initial screen on the display screen (16) by referencing the table;
generating means (73) for generating display data for a display guide screen of the icons registered in the list and of the information relating to the icons, by referencing the table; and
display control means (54) for controlling the display of the display data on the display screen (16);
**characterised in that** the initial screen of the display screen (16) is partitioned into a plurality of areas, each area comprising a plurality of icons;
wherein the storage means (57) stores the table on a per area basis; and
wherein the creating means (112) creates the list by referencing the table corresponding to the area selected by a user.

2. The display apparatus according to claim 1, wherein a plurality of icons displayed on one area of the initial screen having specific values are handled as a unit of icons; and
the generating means generates the display data for the display guide screen, in which the information relating to the unit of icons is arranged for the display guide screen with the same layout as the unit of icons displayed on the one area of the initial screen.

3. A display method comprising steps of:

storing (57) icons to be displayed on a display screen (16), and a table managing information relating to the icons;
wherein the information relating to the icons comprises a name of a function represented by an icon and a value set for the function;
creating (112) a list registering only icons displayed on an initial screen on the display screen (16) by referencing the table;
generating (73) display data for a display guide screen of the icons registered in the list and of the information relating to the icons, by referencing the table; and
controlling the display of the display data on the display screen (16);
**characterised by** the steps of:

partitioning the initial screen of the display screen (16) into a plurality of areas, each area comprising a plurality of icons;
wherein the table is stored on a per area basis; and
wherein the list is created by referencing the table corresponding to the area selected by a user.

4. A computer program for causing a computer to display images, the computer program comprising program code for performing steps of:

storing (57) icons to be displayed on a display screen (16), and a table managing information relating to the icons;
wherein the information relating to the icons comprises a name of a function represented by an icon and a value set for the function;
creating (112) a list registering only icons displayed on an initial screen on the display screen (16) by referencing the table;
generating (73) display data for a display guide screen of the icons registered in the list and of the information relating to the icons, by referencing the table; and
controlling the display of the display data on the display screen (16);
**characterised by** the steps of:

partitioning the initial screen of the display screen (16) into a plurality of areas, each area comprising a plurality of icons;
wherein the table is stored on a per area basis; and

13

wherein the list is created by referencing the table corresponding to the area selected by a user.

5. A recording medium storing a computer program for causing a computer to display images, the computer program comprising program code for performing steps of:

storing (57) icons to be displayed on a display screen (16), and a table managing information relating to the icons;
wherein the information relating to the icons comprises a name of a function represented by an icon and a value set for the function;
creating (112) a list registering only icons displayed on an initial screen on the display screen (16) by referencing the table;
generating (73) display data for a display guide screen of the icons registered in the list and of the information relating to the icons, by referencing the table; and
controlling the display of the display data on the display screen (16);
**characterised by** the steps of:

partitioning the initial screen of the display screen (16) into a plurality of areas, each area comprising a plurality of icons;
wherein the table is stored on a per area basis; and
wherein the list is created by referencing the table corresponding to the area selected by a user.

**Patentansprüche**

1. Anzeigevorrichtung, welche umfasst:

eine Speichereinrichtung (57) zum Speichern von Icons, welche auf einem Anzeigebildschirm (16) anzuzeigen sind, und eine Tabelle, welche Information in Bezug auf die Icons verwaltet;
wobei die Information in Bezug auf die Icons einen Namen einer Funktion umfasst, welche durch ein Icon dargestellt wird, und einen Wert, der für die Funktion eingestellt ist;
eine Bildungseinrichtung (112) zum Bilden einer Liste, welche lediglich Icons registriert, welche auf einem Anfangsbildschirm angezeigt werden, auf dem Anzeigebildschirm (16), wobei auf die Tabelle Bezug genommen wird;
eine Erzeugungseinrichtung (73) zum Erzeugen von Anzeigedaten für einen Anzeigeführungsbildschirm der Icons, welche in der Liste registriert sind, und der Information in Bezug auf die Icons, wobei auf die Tabelle Bezug genommen wird; und
eine Anzeigesteuereinrichtung (54) zum Steuern der Anzeige der Anzeigedaten auf dem Anzeigebildschirm (16);
**dadurch gekennzeichnet, dass** der Anfangsbildschirm des Anzeigebildschirms (16) in mehrere Bereiche unterteilt ist, wobei jeder Bereich mehrere Icons umfasst;
wobei die Speichereinrichtung (57) die Tabelle auf Basis pro Bereich speichert; und
wobei die Bildungseinrichtung (112) die Liste bildet, wobei auf die Tabelle entsprechend dem durch einen Benutzer ausgewählten Bereich Bezug genommen wird.

2. Anzeigevorrichtung nach Anspruch 1, wobei mehrere Icons, welche auf einem Bereich des Anfangsbildschirms angezeigt werden, welche spezifische Werte haben, wie eine Einheit von Icons gehandhabt werden; und
die Erzeugungseinrichtung die Anzeigedaten für den Anzeigeführungsbildschirm erzeugt, in welchem die Information in Bezug auf die Einheit von Icons für den Anzeigeführungsbildschirm mit der gleichen Anordnung wie die Einheit von Icons, welche auf dem einen Bereich des Anfangsbildschirms angezeigt werden, angeordnet ist.

3. Anzeigeverfahren, welches folgende Schritte umfasst:

Speichern (57) von Icons, welche auf einem Anzeigebildschirm (16) anzuzeigen sind, und einer Tabelle, welche Information in Bezug auf die Icons verwaltet;
wobei die Information bezogen auf die Icons einen Namen einer Funktion umfasst, welche durch ein Icon dargestellt wird, und einen Wert, der für die Funktion eingestellt wird;
Bilden (112) einer Liste, welche lediglich Icons registriert, welche auf einem Anzeigebildschirm angezeigt werden, auf dem Anzeigebildschirm (16), wobei auf die Tabelle Bezug genommen wird;
Erzeugen (73) von Anzeigedaten für den Anzeigeführungsbildschirm der Icons, welche in der Liste registriert sind, und der Information in Bezug auf die Icons, wobei auf die Tabelle Bezug genommen wird; und

14

Steuern der Anzeigedaten auf dem Anzeigebildschirm (16);
**gekennzeichnet durch** folgende Schritte:
Unterteilen des Anfangsbildschirms des Anzeigebildschirms (16) in mehrere Bereiche, wobei jeder Bereich mehrere Icons umfasst;
wobei die Tabelle auf Basis pro Bereich gespeichert ist; und
wobei die Liste **durch** Bezugbildung der Tabelle entsprechend zu dem Bereich, der **durch** einen Benutzer ausgewählt wird, gebildet ist.

4. Computerprogramm, um zu bewirken, dass ein Computer Bilder anzeigt, wobei das Computerprogramm einen Programmcode zum Durchführen folgender Schritte umfasst:

   Speichern (57) von Icons, welche auf einem Anzeigebildschirm (16) anzuzeigen sind, und einer Tabelle, welche Information in Bezug auf die Icons verwaltet;
   wobei die Information bezogen auf die Icons einen Namen einer Funktion, welche durch ein Icon dargestellt wird, und einen Wert, welcher für die Funktion eingestellt wird, umfasst;
   Bilden (112) einer Liste, wobei lediglich Icons registriert werden, welche auf einem Anfangsbildschirm angezeigt werden, auf dem Anzeigebildschirm (16), wobei auf die Tabelle Bezug genommen wird;
   Erzeugen (73) von Anzeigedaten für einen Anzeigeführungsbildschirm der Icons, welche in der Liste registriert sind, und der Information bezogen auf die Icons, wobei auf die Tabelle Bezug genommen wird; und
   Steuern der Anzeige der Anzeigedaten auf dem Anzeigebildschirm (16);
   **gekennzeichnet durch** folgende Schritte:
   Unterteilen des Anfangsbildschirms des Anzeigebildschirms (16) in mehrere Bereiche, wobei jeder Bereich mehrere Icons umfasst;
   wobei die Tabelle auf Basis pro Bereich gespeichert ist; und
   wobei die Liste gebildet wird, wobei auf die Tabelle Bezug genommen wird, welche dem Bereich entspricht, der **durch** einen Benutzer ausgewählt wird.

5. Aufzeichnungsmedium, auf welchem ein Computerprogramm gespeichert ist, um zu bewirken, dass ein Computer Bilder anzeigt, wobei das Computerprogramm einen Programmcode zum Durchführen folgender Schritte umfasst:

   Speichern (57) von Icons, welche auf einem Anzeigebildschirm (16) anzuzeigen sind, und einer Tabelle, welche Information in Bezug auf die Icons verwaltet;
   wobei die Information bezogen auf die Icons einen Namen einer Funktion, welche durch ein Icon dargestellt wird, und einen Wert, welcher für die Funktion eingestellt wird, umfasst;
   Bilden (112) einer Liste, wobei lediglich Icons registriert werden, welche auf einem Anfangsbildschirm angezeigt werden, auf dem Anzeigebildschirm (16), wobei auf die Tabelle Bezug genommen wird;
   Erzeugen (73) von Anzeigedaten für einen Anzeigeführungsbildschirm der Icons, welche in der Liste registriert sind, und der Information bezogen auf die Icons, wobei auf die Tabelle Bezug genommen wird; und
   Steuern der Anzeige der Anzeigedaten auf dem Anzeigebildschirm (16);
   **gekennzeichnet durch** folgende Schritte:

   Unterteilen des Anfangsbildschirms des Anzeigebildschirms (16) in mehrere Bereiche, wobei jeder Bereich mehrere Icons umfasst;
   wobei die Tabelle auf Basis pro Bereich gespeichert ist; und
   wobei die Liste gebildet wird, wobei auf die Tabelle Bezug genommen wird, welche dem Bereich entspricht, der **durch** einen Benutzer ausgewählt wird.

## Revendications

1. Dispositif d'affichage comportant :

   un moyen de stockage (57) destiné à stocker des icônes à afficher sur un écran d'affichage (16), et des informations de gestion de table connexes aux icônes ;
   dans lequel les informations relatives aux icônes comportent un nom d'une fonction représentée par une icône et une valeur définie pour la fonction ;
   un moyen de création (112) pour créer une liste enregistrant uniquement des icônes affichées sur un écran initial sur l'écran d'affichage (16) en référençant la table ;

un moyen de génération (73) pour générer des données d'affichage pour un écran d'affichage guide des icônes enregistrées dans la liste et des informations relatives aux icônes, en référençant la table ; et

un moyen de commande d'affichage (54) pour commander l'affichage des données d'affichage sur l'écran d'affichage (16) ;

**caractérisé en ce que** l'écran initial de l'écran d'affichage (16) est partitionné en une pluralité de zones, chaque zone comportant une pluralité d'icônes ;

dans lequel le moyen de stockage (57) stocke la table sur une base « par zone » ; et

dans lequel le moyen de création (112) crée la liste en référençant la table correspondant à la zone sélectionnée par un utilisateur.

**2.** Dispositif d'affichage selon la revendication 1, dans lequel une pluralité d'icônes affichées sur une zone de l'écran initial et qui ont des valeurs spécifiques sont traitées en tant qu'une unité d'icônes ; et

le moyen de génération génère les données d'affichage pour l'écran d'affichage guide, dans lesquelles les informations relatives à l'unité d'icônes sont agencées pour l'écran d'affichage guide avec la même disposition que celles de l'unité d'icônes affichée sur ladite zone de l'écran initial.

**3.** Procédé d'affichage comportant les étapes ci-dessous consistant à :

stocker (57) des icônes à afficher sur un écran d'affichage (16), et des informations de gestion de table connexes aux icônes ;

dans lequel, les informations relatives aux icônes comportent un nom d'une fonction représentée par une icône et une valeur définie pour la fonction ;

créer (112) une liste enregistrant uniquement des icônes affichées sur un écran initial sur l'écran d'affichage (16) en référençant la table ;

générer (73) des données d'affichage pour un écran d'affichage guide des icônes enregistrées dans la liste et des informations relatives aux icônes, en référençant la table ; et

commander l'affichage des données d'affichage sur l'écran d'affichage (16) ;

**caractérisé par** les étapes ci-dessous consistant à :

partitionner l'écran initial de l'écran d'affichage (16) en une pluralité de zones, chaque zone comportant une pluralité d'icônes ;

dans lequel la table est stockée sur une base « par zone » ; et

dans lequel la liste est créée en référençant la table correspondant à la zone sélectionnée par un utilisateur.

**4.** Programme informatique destiné à amener un ordinateur à afficher des images, ledit programme informatique comportant un code de programme destiné à mettre en oeuvre les étapes ci-dessous consistant à :

stocker (57) des icônes à afficher sur un écran d'affichage (16), et des informations de gestion de table relatives aux icônes ;

dans lequel les informations relatives aux icônes comportent un nom d'une fonction représentée par une icône et une valeur définie pour la fonction ;

créer (112) une liste enregistrant uniquement des icônes affichées sur un écran initial sur l'écran d'affichage (16) en référençant la table ;

générer (73) des données d'affichage pour un écran d'affichage guide des icônes enregistrées dans la liste et des informations relatives aux icônes, en référençant la table ; et

commander l'affichage des données d'affichage sur l'écran d'affichage (16) ;

**caractérisé par** les étapes ci-dessous consistant à :

partitionner l'écran initial de l'écran d'affichage (16) en une pluralité de zones, chaque zone comportant une pluralité d'icônes ;

dans lequel la table est stockée sur une base « par zone » ; et

dans lequel la liste est créée en référençant la table correspondant à la zone sélectionnée par un utilisateur.

**5.** Support d'enregistrement stockant un programme informatique destiné à amener un ordinateur à afficher des images, ledit programme informatique comportant un code de programme destiné à mettre en oeuvre les étapes ci-dessous consistant à :

stocker (57) des icônes à afficher sur un écran d'affichage (16), et des informations de gestion de table connexes aux icônes ;

dans lequel les informations relatives aux icônes comportent un nom d'un fonction représentée par une icône et une valeur définie pour la fonction ;

créer (112) une liste enregistrant uniquement des icônes affichées sur un écran initial sur l'écran d'affichage (16) en référençant la table ;

générer (73) des données d'affichage pour un écran d'affichage guide des icônes enregistrées dans la liste et des informations relatives aux icônes, en référençant la table ; et

commander l'affichage des données d'affichage sur l'écran d'affichage (16) ;

**caractérisé par** les étapes ci-dessous consistant à :

partitionner l'écran initial de l'écran d'affichage (16) en une pluralité de zones, chaque zone comportant une pluralité d'icônes ;

dans lequel la table est stockée sur une base « par zone » ; et

dans lequel la liste est créée en référençant la table correspondant à la zone sélectionnée par un utilisateur.

# FIG. 1

# FIG. 2

EP 1 674 993 B1

# FIG. 3

EP 1 674 993 B1

## FIG. 4A

131

SP STANDBY 0 : 01 : 26

UNPLUG ONE AV CABLE ———132

16

AE +1

[ oo ] | P MENU |

133

## FIG. 4B

141-1    141-4

16

SP STANDBY 0 : 01 : 26

MENU    DISPLAY GUIDE    X ———143

142    1/3    CAMERA BRIGHT-NESS    SPOT FOCUS ———141-5

141-2

FADER    SPOT METER-ING

141-3    141-6

# FIG. 5

STANDBY

SP

161

162

163

SELECT AREA

16

164

171-1

171-2

171-3 171-4

AE +1

DISPLAY
GUIDE

END

EP 1 674 993 B1

## FIG. 6

SP STANDBY

16 —

DISPLAY GUIDE

END

FOCUS:
MANUAL

1/2 — PROGRAM AE:
SPOTLIGHT

142 — WHITE BALANCE:
OUTDOOR

# FIG. 7A

131

SP  STANDBY  0 : 01 : 26

UNPLUG ONE AV CABLE ——132

16  DISPLAY GUIDE ——201

# FIG. 7B

161

SP  STANDBY

162

163

16

SELECT AREA

164

DISPLAY GUIDE  END

## FIG. 8A

SP  STANDBY        0 : 21 : 20

♪16b

16

UNPLUG ONE AV CABLE

25P

P MENU —133

## FIG. 8B

SP  STANDBY

♪16b

16

SELECT AREA

25P

DISPLAY
GUIDE

END

# FIG. 9A

STD

9

100

UNPLUG ONE AV CABLE

P MENU — 133

16

# FIG. 9B

STD

100

SELECT AREA

16

DISPLAY
GUIDE

END

# FIG. 10A

© RECORD 0 : 00 : 02

20 MIN

OFF

UNPLUG ONE AV CABLE

16

P MENU ——133

# FIG. 10B

© RECORD

OFF

SELECT AREA

164

DISPLAY GUIDE

END

## FIG. 11A

## FIG. 11B

# FIG. 12A

10/10  [100]▷

000-0001  ⊙━┓  ⊔✓  PLAY BACK MEMORY

→0←  ⊔⊔  ⊐⊏ₒff

16

◁⊐
UNPLUG ONE AV CABLE

+1. 5EV

1 0 0 0 0    A WB

F 1 . 8      ⚡

| − | + | 📼 | ✚ | P MENU |

133

# FIG. 12B

[100]▷

⊙━┓  ⊔

→0←  ⊔⊔  ⊐⊏ₒff

16

◁⊐
SELECT AREA

+1. 5EV

⊦1 0 0 0 0    A WB

F 1 . 8      ⚡

165

DISPLAY
GUIDE

END

## FIG. 13A

## FIG. 13B

# FIG. 14

101

| FIRST AREA TABLE | | | |
|---|---|---|---|
| OBJECT | | | DISPLAY STATE |
| ICON | MEANING | SET VALUE | |
| SP | [oo] RECORDING MODE | | |
| ☐₂₀₁₆ | [■] IMAGE SIZE | | |
| [▯] | IMAGE SIZE | | |
| ⟨⟩ | SOUND SETTING FOR EXTERNAL MICROPHONE | | |
| ⋮ | ⋮ | | |
| NTSC | NTSC PLAYBACK | | |
| PAL | PAL PLAYBACK | | |
| ↻ | SELF TIMER | | |
| ▤ | [■] CONTINUOUS SHOOTING | | |
| ◁◉▷ | RED-EYE REDUCTION | | |
| ⚡ | FLASH MODE | | |

# FIG. 15

— 102

| SECOND AREA TABLE | | | |
|---|---|---|---|
| OBJECT | | | DISPLAY STATE |
| ICON | MEANING | SET VALUE | |
| ☐-2016 | ▮ IMAGE SIZE | | |
| FINE | ▮ IMAGE QUALITY | | |
| [111▷ | SELECT PLAYBACK FOLDER | | |
| →0← | ZERO-SET MEMORY | | |
| ⋮ | ⋮ | | |
| A/V▷DV | A/V INPUT TO DV OUTPUT | | |
| DVɪɴ | DV INPUT | | |
| 📁 | FOLDER FORWARD | | |
| 📁 | FOLDER BACKWARD | | |
| 📁 | FOLDERS FORWARD AND BACKWARD | | |
| ☐ᴏꜰꜰ | LIQUID CRYSTAL SCREEN BACKLIGHT | | |

# FIG. 16

103

| THIRD AREA TABLE | | | |
|---|---|---|---|
| OBJECT | | | DISPLAY STATE |
| ICON | MEANING | SET VALUE | |
| ⊂▭⊃ | BATTERY | - | |
| △ | UNLOAD CASSETTE | | |
| ⋮ | ⋮ | | |
| ▣ | CONDENSATION | | |
| ▣ | NO CASSETTE | | |
| ▱ | NO MEMORY STICK | | |

# FIG. 17

~104

| FOURTH AREA TABLE | | | |
|---|---|---|---|
| OBJECT | | | DISPLAY STATE |
| ICON | MEANING | SET VALUE | |
| ⌨ | FOCUS | | |
| ⌨ | ENLARGED FOCUS DISPLAY | | |
| ⌨ | ZOOMING | | |
| ⌨ | PROGRAM AE | | |
| ⋮ | ⋮ | | |
| ▨ | BACKLIGHT | | |
| ☀ | WHITE BALANCE | | |
| ⊞ | SHARPNESS | | |
| Ⓢ10000 | SHUTTER SPEED | | |
| AE+1 | AE SHIFT | | |
| ◉ | COLOR DENSITY OF CAMERA | | |

## FIG. 18

105

| FIFTH AREA TABLE | | | | |
|---|---|---|---|---|
| OBJECT | | | | DISPLAY STATE |
| ICON | ARRANGE-MENT | MEANING | SET VALUE | |
| | ① | IMAGE STABILIZER | | |
| | ② | ADJUST BRIGHTNESS | | |
| | ③ | SHUTTER SPEED | | |
| | ④ | WHITE BALANCE | | |
| | ⑤ | f-STOP | | |
| | ⑥ | GAIN | | |
| | ① | CORRECTED EXPOSURE | | |
| | ② | SHUTTER SPEED | | |
| | ③ | f-STOP | | |
| | ④ | FLASH | | |

EP 1 674 993 B1

## FIG. 19A

## FIG. 19B

# FIG. 20A

# FIG. 20B

# FIG. 21A

161

16

163

164

SP  STANDBY

162

SELECT AREA

132

DISPLAY GUIDE

END

# FIG. 21B

16

SP  STANDBY

NO ICON TO GUIDE

132

DISPLAY GUIDE

END

# FIG. 22

```
START OF CREATING DISPLAY LIST
```

DETECT AREA —S11

N=0 —S12

REFER TO TABLE CORRE-
SPONDING TO SELECTED AREA —S13

S14

"N"-TH OBJECT DISPLAYED? —— NO

S17

N=N+1

YES

ADD "N"-TH OBJECT
TO DISPLAY LIST —S15

S16

NO —— LAST TABLE?

YES

```
END
```

# FIG. 23

| AREA TABLE | |
|---|---|
| N | DISPLAY STATE |
| OBJECT 0 | ON |
| OBJECT 1 | ON |
| OBJECT 2 | OFF |
| OBJECT 3 | OFF |
| OBJECT 4 | OFF |
| OBJECT 5 | ON |
| OBJECT 6 | ON |
| OBJECT 7 | OFF |
| OBJECT 8 | ON |
| OBJECT 9 | OFF |

301

# FIG. 24

| DISPLAY LIST | |
|:---:|:---:|
| i | |
| 0 | OBJECT 0 |
| 1 | OBJECT 1 |
| 2 | OBJECT 5 |
| 3 | OBJECT 6 |
| 4 | OBJECT 8 |

311

# FIG. 25

START

↓

i=0, j=1 —— S31

↓

ACQUIRE PRESENT PAGE NUMBER —— S32

↓

i = (PAGE NUMBER -1)×3 —— S33

↓

ACQUIRE "i"-TH DISPLAY OBJECT —— S34

↓

ACQUIRE ICON CORRESPONDING TO DISPLAY OBJECT —— S35

↓

ACQUIRE MEANING CORRES-PONDING TO DISPLAY OBJECT —— S36

↓

ACQUIRE SET VALUE CORRES-PONDING TO DISPLAY OBJECT —— S37

↓

DRAW ICON, MEANING, AND SET VALUE —— S38

↓

NO — LAST TABLE OR j=3? —— S39

S40
i=i+1
j=j+1

YES

↓

END

# FIG. 26

EP 1 674 993 B1

**EP 1 674 993 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001312343 A
- EP 1434411 A1
- US 6788313 B1